# EUROPÄISCHE PATENTSCHRIFT

(11) **EP 4 059 124 B1**
(45) Veröffentlichungstag und Bekanntmachung des Hinweises auf die Patenterteilung: **17.04.2024**
(21) Anmeldenummer: 20819633.7
(22) Anmeldetag: 12.11.2020
(51) Int. Cl.: H02K 15/00

(54) **VORRICHTUNG ZUM UMFORMEN EINES IN EINEM STATORKERN ANGEORDNETEN LEITERSTÜCKS SOWIE EIN ENTSPRECHENDES VERFAHREN**
APPARATUS FOR RESHAPING A CONDUCTOR PIECE ARRANGED IN A STATOR CORE AND A CORRESPONDING METHOD
DISPOSITIF POUR METTRE EN FORME UNE PIÈCE CONDUCTRICE PLACÉE DANS UN NOYAU STATORIQUE ET PROCÉDÉ CORRESPONDANT

(30) Priorität: 12.11.2019 DE 102019130534
(43) Veröffentlichungstag der Anmeldung: 21.09.2022
(73) Patentinhaber: Gehring Technologies GmbH + Co. KG, 73760 Ostfildern (DE)
(72) Erfinder: BÄDER, Christoph, 73776 Altbach (DE)
(74) Vertreter: DREISS Patentanwälte PartG mbB
(86) Internationale Anmeldenummer: PCT/EP2020/081871
(87) Internationale Veröffentlichungsnummer: WO 2021/094433

(56) Entgegenhaltungen:
- WO-A1-2019/104362
- JP-A- 2012 175 748
- JP-A- 2016 131 425

## Beschreibung

Die Erfindung betrifft eine Vorrichtung zur Umformung eines in einem Statorkern angeordneten Leiterstücks, sowie ein entsprechendes Verfahren.

JP 2016 131425 A, JP 2012 175748 A, WO 2019/104362 A1 beschreiben Vorrichtungen zum Umformen eines oder mehrerer in einem Statorkern angeordneter Leiterstücke, die sich jedoch von der vorliegenden Erfindung unterscheiden.

Bei der sogenannten Hairpin-Technologie werden im weitesten Sinne haarnadelförmige Leiterstücke (Hairpins) zusammen mit einzelnen andersartigen Sonderpins in einen Statorkern eingesetzt. Hairpins sind dabei Leiterstücke mit im Wesentlichen zwei länglich erstreckten Schenkeln und einem diese beiden Schenkel verbindenden Verbindungsabschnitt. Die Vielzahl an Leiterstücken ist dabei üblicherweise derart angeordnet, dass die Leiterstücke auf mehreren in einer Umfangsrichtung verlaufenden Kreisbahnen in Reihen, die jeweils in einer Radialrichtung erstreckt sind, angeordnet sind. Dabei ragen die freien Enden der Schenkel auf einer Seite des Statorkerns aus diesem hinaus und die Verbindungsabschnitte sind auf der anderen Seite des Statorkerns angeordnet.

Nach dem Einsetzen werden die freien Enden in Umfangsrichtung verdreht bzw. verbogen, wobei dieser Schritt auch als "Twisten" bezeichnet wird. Dabei werden einzelne Hairpins (allgemein Leiterstücke bzw. deren freie Enden) im Uhrzeigersinn und andere gegen den Uhrzeigersinn in Umfangsrichtung verdreht. Typischerweise werden die Hairpins derart verdreht, dass sie nach dem Verdrehen in einer direkt benachbarten Reihe oder einer übernächsten Reihe angeordnet sind (denkbar ist auch, dass weitere Reihen übersprungen werden). Das Twisten wird beispielsweise mittels konzentrisch zueinander angeordneten Zylindern, die rotierbar sind, durchgeführt, wobei jeweils Leiterstücke, die auf einer Kreisbahn angeordnet sind, in einem Zylinder in entsprechenden Aufnahmen aufgenommen sind. Das Verdrehen der Zylinder zueinander verbiegt die Leiterstücke auf benachbarten Kreisbahnen in unterschiedliche Richtungen.

Vor dem Twisten kann es gewünscht sein die Hairpins radial auswärts zu biegen. Mit diesem Umformschritt befasst sich die vorliegende Erfindung und stellt eine Vorrichtung, deren Verwendung sowie ein Verfahren zum entsprechenden Umformen insbesondere der radial äußeren Hairpins bereit. Im Anschluss an das Twisten werden die Hairpins üblicherweise abgelängt (auf eine vorgesehene Länge gekürzt) und anschließend bestimmte Hairpins/Leiterstücke bzw. deren freie Enden miteinander verschweißt, um so die Wicklungen des Stators zu bilden. Um die Hairpins zu kürzen und für den Verschweißvorgang zu Maskieren (hierdurch wird verhindert, dass heißes Material in den Stator gelangt), wird häufig eine plattenartige Abdeckung mit Ausnehmungen auf die freien Enden aufgesetzt, so dass die freien Enden in den Ausnehmungen angeordnet sind. Beim Ablängen werden dann mittels eines Hobels die über die Abdeckung hinausstehenden freien Enden abgetrennt. Andere Arten des Ablängens können vorgesehen sein.

Es ist Aufgabe der vorliegenden Erfindung, eine Vorrichtung, und ein Verfahren zur Verfügung zu stellen, mit denen das dem Twisten vorangehende Umformen von Leiterstücken in einem Statorkern möglichst schnell und präzise durchgeführt werden kann. Nachfolgend wird zunächst die Vorrichtung und anschließend das Verfahren im Detail erläutert. Dabei können Aspekte, die im Zusammenhang mit der Vorrichtung beschrieben werden, auch bevorzugte Ausgestaltung des Verfahrens betreffen umgekehrt Aspekte, die im Zusammenhang mit dem Verfahren beschrieben werden, auch bevorzugte Ausgestaltung der Vorrichtung betreffen. Im Sinne der Erfindung ist insbesondere die erfindungsgemäße Vorrichtung zu Durchführung des erfindungsgemäßen Verfahrens zu nutzen.

### Die Vorrichtung

Gelöst wird die Aufgabe durch eine Vorrichtung zum Umformen eines oder mehrerer in einem Statorkern angeordneten Leiterstücke nach Anspruch 1, wobei die Vorrichtung umfasst:
Eine Aufnahme zum Aufnehmen eines Statorkerns. In dem Statorkern ist eine Vielzahl an Leiterstücken angeordnet. Diese sind typischerweise in einer Umfangsrichtung in Reihen angeordnet. Jede Reihe erstreckt sich in einer Radialrichtung. Die Radialrichtung ist vom Mittelpunkt des Statorkerns radial nach außen gerichtet. Der Statorkern befindet sich in der Aufnahme in einer Bearbeitungsposition. Dabei befinden sich die umzuformenden Leiterstücke in einer Ausgangskonfiguration. In der Ausgangskonfiguration, also noch vor dem Umformen, ragen die Leiterstücke aus dem Statorkern entlang einer Längsrichtung erstreckt heraus. Die Umformung erfolgt dabei an den aus dem Statorkern herausragenden freien Enden der Leiterstücke.

Die Leiterstücke haben insbesondere einen rechteckigen Leiterquerschnitt, wobei die Ecken des Querschnitts abgerundet sein können. Des Weiteren weisen die Leiterstücke typischerweise eine elektrische Isolierung auf.

Eine Biegeeinheit zum Umformen eines oder mehrerer Leiterstücke, wobei die Biegeeinheit eine Positioniereinheit umfasst.

Die Positioniereinheit dient zur Positionierung der Biegeeinheit gegenüber dem Statorkern, der in der Aufnahme angeordnet ist. Die Positioniereinheit wird während des Umformvorgangs des Leiterstücks bzw. der Leiterstücke nicht bewegt.

Die Biegeeinheit umfasst weiter einen Kontaktabschnitt. Dieser ist derart ausgebildet, dass damit das Leiterstück bzw. die Leiterstücke seitlich, in Bezug auf die Längserstreckung des Leiterstücks bzw. der Leiterstücke, kontaktiert wird. Dabei geschieht die Kontaktierung typischerweise lose, ohne einen greifenden bzw. klemmenden Kontakt. Insbesondere wird das Leiterstück bzw. die Leiterstücke zusätzlich von oben, also in Richtung des Statorkerns, durch den Kontaktabschnitt kontaktiert.

Des Weiteren weist die Biegeeinheit einen Aktuator auf. Dieser ist derart angeordnet und ausgebildet, dass damit der Kontaktabschnitt relativ zur Positioniereinheit bewegt werden kann, sodass das Leiterstück bzw. die Leiterstücke umgeformt werden können.

Der Kontaktabschnitt ist derart in der Positioniereinheit gelagert, dass der Kontaktabschnitt bei Betätigung des Aktuators einen ersten Bewegungsschritt ausführt. Dabei wird der Kontaktabschnitt gegenüber der Positioniereinheit in eine erste Biegerichtung bewegt. Die erste Biegerichtung kann, je nach gewünschter Richtung in die die Leiterstücke zu biegen sind, die Radialrichtung oder die entgegengesetzte Richtung sein. Es kann aber auch eine zur Radialrichtung orthogonalen Richtung sein. Die Biegerichtung kann auch schräg zur Radialrichtung und zur dazu orthogonalen Richtung ausgerichtet sein.

Während des ersten Bewegungsschritts wird die Schwenkstellung des Kontaktabschnitts nicht verändert. Mit anderen Worten, die Ausrichtung des Kontaktabschnitts, insbesondere bezüglich der Längsachse, bleibt gleich. Dabei folgt das umzuformende Leiterstück bzw. Leiterstücke bzw. deren in dem Kontaktabschnitt aufgenommene Teile der Bewegung des Kontaktabschnitts, sodass eine Biegung des Leiterstücks in einem ersten Biegepunkt und in einem zweiten Biegepunkt erfolgt.

In einem zweiten Bewegungsschritt, ist die Bewegung des Kontaktabschnitts in die erste Biegerichtung mit einer Schwenkbewegung in eine zweite Biegerichtung des Kontaktabschnitts überlagert. Dabei ist die zweite Biegerichtung entgegen der ersten Biegerichtung gerichtet. Im zweiten Bewegungsschritt wird bspw. der Kontaktabschnitt translatorisch radial auswärts bewegt (und ggf. leicht in Richtung des Statorkerns bewegt) und zusätzlich radial einwärts geschwenkt. Überlagert ergibt sich eine Bewegung in der die statorkernzugewandte Seite des Kontaktabschnitts weiter radial auswärts bewegt wird als die statorkernabgewandte Seite des Kontaktabschnitts.

Der erste Bewegungsschritt wird vor dem zweiten Bewegungsschritt durchgeführt. Mit dem ersten Bewegungsschritt wird unter anderem zunächst ein entsprechender Abstand zwischen den gerade aus dem Statorkern herausragenden Leiterstücken und den umgeformten Leiterstücken geschaffen. Während des zweiten Bewegungsschritts kann das Verschwenken des Kontaktabschnitts in die zweite Biegerichtung, die entgegen der ersten Biegerichtung bzw. entgegen der Radialrichtung, gerichtet ist, durchgeführt werden, ohne dass die entlang der Längsrichtung erstreckten, gerade aus dem Statorkern herausragenden Leiterstücke der Schwenkbewegung quasi im Weg sind.

Im zweiten Bewegungsschritt wird das dem Statorkern zugewandte Ende des Kontaktabschnitts weiter in die erste Biegerichtung bewegt als ein von dem Statorkern bzw. der Aufnahme weiter entfernt angeordneter Abschnitt des Kontaktabschnitts. Die Schwenkbewegung bewirkt, dass das freie Ende des Leiterstücks bzw. der Leiterstücke quasi in die zweite Biegerichtung gebogen wird.

Im ersten Bewegungsschritt wird quasi der Bereich um das freie Ende, ein sich vom freien Ende in Längsrichtung erstreckender Endabschnitt, der im zweiten Biegepunkt endet, in seiner in Längsrichtung gerichteten Ausrichtung gehalten. Hierzu ist er im Kontaktabschnitt aufgenommen. Durch die Bewegung des Kontaktabschnitts (bspw. radial auswärts) in die erste Biegerichtung wird ein sich an den Endabschnitt anschließender Mittelabschnitt, der sich zwischen dem ersten Biegepunkt und dem zweiten Biegepunkt erstreckt, radial auswärts geschwenkt gegenüber dem Teil des Leiterstücks, welches unbeweglich im Statorkern gehalten angeordnet ist. Um nun ein Rückfedern des Materials vorwegzunehmen und schlussendlich nach dem Entfernen des Kontaktabschnitts die gewünschte Konfiguration des Leiterstücks zu erhalten, wird in einem zweiten Bewegungsschritt die Schwenkbewegung in die zweite Biegerichtung der Bewegung in die erste Biegerichtung überlagert. Beim Lösen des Kontaktabschnitts von den freien Enden der Leiterstücke schwenkt zum einen der Mittelabschnitt entgegen der ersten Biegerichtung, also bspw. radial einwärts und zum anderen der Endabschnitt radial auswärts. Um dies vorab zu kompensieren wird zum einen die radial auswärts gerichtete Bewegung weiter durchgeführt als für die Endstellung (wenn keine Rückfederung des Materials gegeben ist) benötigt und zum anderen wird der Endabschnitt mit dem freien Ende radial einwärts gegenüber dem Mittelabschnitt gekippt (zweiter Bewegungsschritt).

Die Biegung um den ersten Biegepunkt und die Biegung um den zweiten Biegepunkt können also, um eine durch die Elastizität des Materials bedingte Rückfederung zu kompensieren bzw. vorwegzunehmen, jeweils um einen größeren Winkel durchgeführt werden, als im endgültig verformten Zustand eigentlich gewünscht ist. Bei der Biegung um den ersten Biegepunkt kann dies dadurch bewirkt werden, dass der Kontaktabschnitt weiter in die erste Biegerichtung bewegt wird, als in der endgültig verformten Position eigentlich vorgesehen. Je weiter der Kontaktabschnitt und das damit mitgenommene Leiterstück bzw. Leiterstücke in die erste Biegerichtung bewegt wird, desto weiter wird der Mittelabschnitt bspw. auswärts geschwenkt. Bei der zweiten Biegung kann dies durch die Schwenkbewegung des Kontaktabschnitts in die zweite Biegerichtung bewirkt werden. Je weiter der Kontaktabschnitt und der mitgenommene Endabschnitt des Leiterstücks bzw. der Leiterstücke geschwenkt werden, desto weiter einwärts wird der Endabschnitt gegenüber dem Mittelabschnitt gekippt.

Mit einem solchen gezielten Überbiegen kann ein Rückfedern des Leiterstücks nach dem Biegen zumindest teilweise bestenfalls vollständig ausgeglichen werden. Das Rückfedern wird zwangsläufig durch verschiedene Gegebenheiten bedingt. Diese sind z. B. das Material des Leiterstücks (meist Kupfer) bzw. dessen Qualität, die Dicke des Leiterstücks, die Temperatur, etc.

Es ist daher möglich das Leiterstück bzw. die Leiterstücke derart zu verbiegen und damit aufzuweiten, dass das dem Verbindungsabschnitt abgewandte Ende des Leiterstücks, und insbesondere der Endabschnitt des Leiterstücks, nach der zweifachen Biegung wieder parallel zur Längsrichtung ausgerichtet ist.

Beide Bewegungsschritte werden bei der erfindungsgemäßen Vorrichtung typischerweise mittels des gleichen Aktuators bewirkt. Die Bewegungsschritte sind dabei üblicherweise nicht zeitlich getrennt, sondern der zweite Bewegungsschritt schließt sich unmittelbar an den ersten Bewegungsschritt an.

In Betriebsstellung ist das Leiterstück bzw. die Leiterstücke in dem Kontaktabschnitt aufgenommen.

Der Kontaktabschnitt ist insbesondere hülsenartig ausgebildet. Mit hülsenartig ist ein länglich erstreckter Hohlraum zur Aufnahme eines oder mehrerer Leiterstücke gemeint. Er weist ein erstes Ende auf, das in Betriebsstellung dem Statorkern zugewandt ist und offen ist, um die Leiterstücke in den Hohlraum einzuführen. Der Kontaktabschnitt weist weiter ein zweites Ende auf, das dem ersten Ende gegenüberliegt, in Betriebsstellung dem Statorkern abgewandt ist und insbesondere geschlossen ist. Das geschlossene Ende kann als Anschlag für die Enden der Leiterstücke dienen. Damit kann auf einfache Art und Weise stets die gleiche Erstreckung an Leiterstücken in dem Kontaktabschnitt aufgenommen werden.

Das Leiterstück bzw. die Leiterstücke wird mit seinem freien, aus dem Statorkern herausragenden Ende durch das offene erste Ende des Kontaktabschnitts bis zum zweiten geschlossenen Ende des Kontaktabschnitts eingeführt. Typischer Weise liegt das Leiterstück seitlich an einer seitlichen, also entlang der Längserstreckung des Leiterstücks, erstreckten Innenwand des Kontaktabschnitts an. Das freie Ende des Leiterstücks bzw. der Leiterstücke steht im aufgenommenen Zustand in Kontakt mit der Innenwand des geschlossenen Endes des Kontaktabschnitts. Das zweite, geschlossene Ende des Kontaktabschnitts bildet damit quasi einen Höhenanschlag für das freie Ende des Leiterstücks bzw. der Leiterstücke.

Vorzugsweise weist die Biegeeinheit ein erstes Führungselement und ein zweites Führungselement auf. Dabei ist das erste Führungselement in dem zweiten Führungselement um einen Schwenkpunkt des ersten Führungselements schwenkbar gelagert.

Das erste Führungselement ist insbesondere in eine Anlageposition (eine bestimmte Schwenkstellung relativ zum zweiten Führungselement) vorgespannt. In der Anlageposition liegt das erste Führungselement an einem Anschlag (später auch als vierter Anschlag bezeichnet) des zweiten Führungselements an. Dies kann mittels einer Feder bewirkt werden. Entsprechend kann das erste Führungselement von dem Anschlag weg, entgegen der Federvorspannung weg geschwenkt werden. Der eben erwähnte Anschlag beschränkt also die Verschwenkbarkeit des ersten Führungselements.

Des Weiteren ist das erste Führungselement mit dem Kontaktabschnitt derart gekoppelt, dass eine Schwenkbewegung des ersten Führungselements sich auf den Kontaktabschnitt überträgt. Damit wird der Kontaktabschnitt bei einer Schwenkbewegung des ersten Führungselements ebenfalls mit verschwenkt.

Der Kontaktabschnitt ist insbesondere gegenüber dem ersten Führungselement entlang einer Erstreckungsachse des ersten Führungselements bewegbar. Die Erstreckungsachse des ersten Führungselements wird beim einer Schwenkbewegung des ersten Führungselements ebenfalls mit verschwenkt.

Insbesondere kann der Kontaktabschnitt entlang einer Erstreckungsachse gegenüber dem Schwenkpunkt des ersten Führungselements bewegbar sein. Der Abstand des Kontaktabschnitts zum Schwenkpunkt ist also in dieser Ausgestaltung veränderbar.

Der Kontaktabschnitt ist insbesondere entlang der Erstreckungsachse des ersten Führungselements in Betriebsstellung in Richtung zum Statorkern hin vorgespannt. Dies kann mittels einer Feder (insbesondere Blattfeder/n) bewirkt werden.

Das zweite Führungselement ist bezüglich der Positioniereinheit entlang der ersten Biegerichtung geführt beweglich und insbesondere geradlinig (translatorisch bewegbar) geführt. Mit anderen Worten, das zweite Führungselement kann nur entlang eines Freiheitsgrades in der Positioniereinheit translatorisch bewegt werden. Bevorzugt ist der Schwenkpunkt des ersten Führungselements am oder im zweiten Führungselement angeordnet und ist unbeweglich gegenüber dem zweiten Führungselement. Damit folgt der Schwenkpunkt der Bewegung des zweiten Führungselements und überträgt somit die translatorische Bewegung des zweiten Führungselements auf das erste Führungselement.

Der Schwenkpunkt des ersten Führungselements am oder im zweiten Führungselement ist typischerweise zwischen dem die Verschwenkbarkeit des ersten Führungselements begrenzenden Anschlag und dem Kontaktabschnitt angeordnet (insbesondere entlang der Richtung in der das zweite Führungselement bezüglich der Positioniereinheit bewegbar ist).

Bevorzugter Weise umfasst die Positioniereinheit ein U-förmig ausgebildetes Rahmenelement. Das erste Führungselement und das zweite Führungselement sind in dem Rahmenelement beweglich gelagert.

Das Rahmenelement kann einen ersten Anschlag umfassen, der in der ersten Biegerichtung angeordnet ist. Der erste Anschlag dient zur Kontaktierung des ersten Führungselements, wenn dieses in die erste Biegerichtung bewegt wird (translatorisch gegenüber dem Rahmenelement bewegt wird). Wenn das erste Führungselement mit dem zweiten Führungselement gemeinsam translatorisch gegenüber dem Rahmenelement bewegt wird, kann es den ersten Anschlag kontaktieren und wird hierdurch gegenüber dem zweiten Führungselement geschwenkt.

Der Schwenkpunkt, in dem das erste Führungselement mit dem zweiten Führungselement verbunden ist, kann, insbesondere in Bezug zur Längsrichtung, zwischen dem ersten Anschlag und dem Kontaktabschnitt angeordnet sein.

Die Bezeichnungen erster, zweiter, dritter usw. sollen den jeweils bezeichneten Elementen keine Rangfolge zuordnen und auch nicht zwingend deren Vorgänger voraussetzen (es kann also einen zweiten Anschlag o.ä. ohne einen entsprechenden ersten Anschlag geben). Die Bezeichnungen dienen lediglich der besseren Lesbarkeit und Unterscheidbarkeit der einzelnen erwähnten Elemente.

Das Rahmenelement weist weiter insbesondere einen zweiten Anschlag auf. Dieser dient zur Kontaktierung des zweiten Führungselements, wenn dieses in die erste Biegerichtung bewegt wird. Der zweite Anschlag begrenzt die Bewegung des zweiten Führungselements (gegenüber dem Rahmenelement) in die erste Biegerichtung.

Das Rahmenelement kann einen dritten Anschlag aufweisen, der zur Kontaktierung des zweiten Führungselements dient, wenn dieses entgegen der ersten Biegerichtung bewegt wird. Das zweite Führungselement ist also in und entgegen der ersten Biegerichtung gegenüber dem Rahmenelement zwischen dem zweiten Anschlag und dem dritten Anschlag hin und her bewegbar.

Ein vierter Anschlag kann im zweiten Führungselement vorgesehen sein, wobei dieser ausgebildet ist, um die Schwenkstellung des ersten Führungselements gegenüber dem zweiten Führungselement in die erste Biegerichtung zu begrenzen. Insbesondere ist das erste Führungselement in eine Anlageposition gegen diesen vierten Anschlag gespannt.

Dies kann mittels einer Feder bewirkt werden. In einer Ausgangsstellung der Vorrichtung befindet sich das erste Führungselement in dieser Anlageposition.

Das zweite Führungselement kann einen fünften Anschlag aufweisen, der die Schwenkstellung des ersten Führungselements gegenüber dem zweiten Führungselement entgegen der ersten Biegerichtung begrenzt. Das erste Führungselement kann also gegenüber dem zweiten Führungselement zwischen dem vierten Anschlag, an dem es in der Anlageposition anliegt, und dem fünften Anschlag, der die maximale Verschwenkbarkeit aus der Anlageposition hinaus begrenzt, verschwenkt werden.

Insbesondere ist das erste Führungselement in eine von dem fünften Anschlag weg geschwenkte Stellung gespannt. Wie oben bereits erwähnt, kann dies über eine Feder, nämlich die das erste Führungselement in eine Anlageposition gegen den vierten Anschlag spannt, realisiert sein. Die von dem fünften Anschlag weg geschwenkte, vorgespannte Stellung des ersten Führungselements ist die Anlageposition. Vorzugsweise ist die Position des ersten Anschlags, des zweiten Anschlags, des dritten Anschlags, des vierten Anschlags und/oder des fünften Anschlags einstellbar. Sollten weitere Anschläge vorhanden sein, so können diese ebenfalls einstellbar in ihrer Position sein.

Insbesondere ist der Kontaktabschnitt, insbesondere mittels einer Kolbenstange, beweglich in dem ersten Führungselement geführt, insbesondere translatorisch geführt, gelagert. Die Kolbenstange kann vorgespannt sein. Dies kann mittels einer Feder, in Form z. B. einer oder mehreren Blattfedern, bewirkt werden. Somit kann der Kontaktabschnitt bzw. die Kolbenstange in Bezug auf das erste Führungselement sich nur entlang eines Freiheitsgrades bewegen. Dieser Freiheitsgrad erstreckt sich entlang der Kolbenstange und insbesondere entlang der Erstreckungsachse des ersten Führungselements.

Vorzugsweise weist der Aktuator (der Aktuator ist typischerweise ein Linearaktuator) ein Gelenk bzw. eine gelenkige Verbindung mit dem Kontaktabschnitt auf. Dieses dient dazu insbesondere die Schwenkbewegung des Kontaktabschnitts auszugleichen. Ein solches Gelenk kann beispielsweise in Form eines Gabelkopfes,
in dem der Kontaktabschnitt schwenkbar gelagert angeordnet ist, ausgestaltet sein.

Die Vorrichtung kann eine Gegenlagereinrichtung umfassen. Diese kann mit einem Gegenlagerabschnitt an ein Leiterstück angelegt werden. Durch das Anlegen des Gegenlagerabschnitts wird ein erster Biegepunkt definiert.

Die Gegenlagereinrichtung, das Rahmenelement und/oder der Aktuator können im Wesentlichen in einer Ebene angeordnet sein. Dadurch ergibt sich eine kompakte Bauweise der Vorrichtung und eine kompakte und insbesondere schmale Bauweise der Biegeeinheit.

Der erste Biegepunkt kann aber auch durch eine Kante definiert werden, die durch den Statorkern selbst, bzw. durch die den freien Enden der Leiterstücke zugewandten Seite des Statorkerns, gebildet wird, so dass der erste Biegepunkt sich in einem unmittelbar an den Statorkern angrenzenden Bereich des Leiterstücks bzw. der Leiterstücke befindet. Die Kante des Statorkerns kann abgerundet sein, um beispielsweise eine Beschädigung des Leiterstücks und/oder der Isolierung des Leiterstücks zu vermeiden. Es ist ebenso denkbar, die Kante, die den ersten Biegepunkt definiert, durch einen Einsatz, z. B. Plastikeinsatz, im Stator und/oder eine Maske, z. B. eine Plastikmaske, zum Auflegen auf den Stator zu realisieren.

Des Weiteren kann der Gegenlagerabschnitt durch eine Bewegung der Gegenlagereinrichtung in die zweite Biegerichtung an das Leiterstück angelegt werden. Dabei vollzieht die Gegenlagereinrichtung insbesondere eine radial einwärts gerichtete Bewegung gegenüber dem Statorkern. Hierzu kann die Vorrichtung eine entsprechende Lagerung der Gegenlagereinrichtung aufweisen.

Bevorzugt ist der Gegenlagerabschnitt derart angeordnet ausgebildet, dass dieser unmittelbar an den Bereich des Leiterstücks anlegebar ist, der an den Statorkern angrenzt. Somit ist eine Biegung des freien aus dem Statorkern herausragenden Endes des Leiterstücks (bzw. der Leiterstücke) in unmittelbarer Nähe zum Statorkern möglich. Hierdurch ist ein insbesondere in Längsrichtung kompakter getwisteter Bereich der Leiterstücke realisierbar und damit eine insgesamt kompaktere Bauweise des Stators möglich. Der Gegenlagerabschnitt ist insbesondere zumindest teilweise abgerundet ausgebildet. Durch die abgerundete Form des Gegenlagerabschnitts werden Beschädigungen des Leiterstücks und/oder der Isolierung des Leiterstücks vermieden. Durch die Größe des Gegenlagerabschnitt kann des Weiteren die Biegung geometrisch definiert werden. Der Radius der Biegung entspricht dem Radius der abgerundeten Form des Gegenlagerabschnitts und kann somit mit der Größe der abgerundeten Form des Gegenlagerabschnitts gezielt variiert werden.

Der Kontaktabschnitt kann eine Kante (insbesondere abgerundet) aufweisen, die zum Einführen zwischen zwei aneinander anliegenden Leiterstücken vorgesehen ist, und hierzu eine sich in Richtung zum Statorkern bzw. zur Aufnahme hin verjüngende Form aufweist. Die Kante dient dazu den Eingriff des Kontaktabschnitts zwischen zwei aneinander anliegende Leiterstücke zu erleichtern und diese leicht voneinander zu entfernen, um anschließend den eigentlichen Biegevorgang durchzuführen. Bspw. kann die Kante, die zum Einführen zwischen die Leiterstücke vorgesehen ist abgerundet ausgebildet sein, wobei der Radius der Abrundung unter 1mm liegt, insbesondere unter 0,75mm, insbesondere unter 0,5mm. Die Abrundung verhindert eine Beschädigung der Isolation der Leiterstücke, wobei dennoch ein ausreichend schlankes Profil der Kante gegeben ist, um zwischen die Leiterstücke geschoben zu werden und diese dabei auseinander zu drängen. Diese Kante bildet auch den durch die Position des Kontaktabschnitts festgelegten zweiten Biegepunkt.

Der Kontaktabschnitt kann eine Durchgangsöffnung zur Aufnahme der Leiterstücke umfassen. Der Kontaktabschnitt kann alternativ auch Sacklochartig ausgebildet sein bzw. jedenfalls einen Wandabschnitt aufweisen, der zur Kontaktierung der freien Enden der Leiterstücke von deren Kopfseite her ausgebildet und angeordnet ist.

Der Kontaktabschnitt kann eine Klemmeinrichtung umfassen, die ausgebildet ist, um die Leiterstücke, die im Kontaktabschnitt aufgenommen sind, in Richtung der den zweiten Biegepunkt definierenden Kante liegenden Anlagewand des Kontaktabschnitts zu klemmen bzw. gegen diese Anlagewand zu drängen.

Der Kontaktabschnitt kann eine abgerundete Kante zum Eingriff zwischen zwei benachbart zueinander angeordnete Leiterstücke umfassen. Der Kontaktabschnitt kann eine Klemmeinrichtung zur klemmenden Verspannung aufgenommener Leiterstücke zwischen einer Klemmfläche und einer Anlagewand (seitliche Wand des Aufnahmebereichs) aufweisen. Der Kontaktabschnitt kann eine Klemmeinrichtung mit einem in Richtung einer Anlagewand gespannten Klemmelement aufweisen, wobei das Klemmelement eine geneigte Einführfläche aufweist. Dies erlaubt ein einfaches Einführen der Leiterstücke.

Die Anlagewand kann unmittelbar in die Kante des Kontaktabschnitts übergehen.

### Das Verfahren

Die eingangs genannte Aufgabe wird ferner durch das beanspruchte Verfahren zum Umformen eines oder mehrerer in einem Statorkern angeordneten Leiterstückes, insbesondere Hairpins, nach Anspruch 17 gelöst, wobei das Verfahren die folgenden Schritte umfasst:
Anordnen des Statorkerns in einer vorgesehenen Bearbeitungsposition. In der Bearbeitungsposition ist das umzuformende Leiterstück bzw. die umzuformenden Leiterstücke in einer Ausgangskonfiguration derart angeordnet, dass die aus dem Statorkern herausragenden freien Enden der Leiterstücke entlang einer Längsrichtung erstreckt aus dem Statorkern herausragen.

Bewegen eines Kontaktabschnitts entlang der Längsrichtung in eine Kontaktstellung mit dem Leiterstück bzw. den Leiterstücken. Der Kontaktabschnitt ist ausgebildet um das oder die umzuformenden Leiterstücke seitlich entlang der Längsrichtung zu kontaktieren. In der Kontaktstellung ist das Leiterstück bzw. die Leiterstücke in dem Kontaktabschnitt aufgenommen. In der aufgenommenen Stellung kontaktiert der Kontaktabschnitt die Leiterstücke wenigstens seitlich insbesondere jedoch seitlich und in Längsrichtung vom freien Ende der Leiterstücke her. Bewegen des Kontaktabschnitts in eine erste Biegerichtung. Die erste Biegerichtung kann die Radialrichtung oder die entgegengesetzte Richtung sein. Es kann aber auch eine zur Radialrichtung orthogonalen Richtung sein. Auch eine Richtung, die eine Überlagerung einzelner Richtungen, z. B. Radialrichtung und dazu orthogonale Richtung, ist, ist denkbar. Dabei bleibt die Ausrichtung des Kontaktabschnitts insbesondere entlang der Längsrichtung unverändert. Damit bleibt auch die Ausrichtung des in dem Kontaktabschnitt aufgenommenen Endabschnitts des Leiterstücks bzw. der Leiterstücke unverändert. Dadurch wird das Leiterstück bzw. die Leiterstücke um einen ersten Biegepunkt in die erste Biegerichtung gebogen und um einen zweiten Biegepunkt in eine zweite Biegerichtung gebogen. Der erste und der zweite Biegepunkt sind beabstandet voneinander angeordnet. Der zweite Biegepunkt wird durch eine Kante des Kontaktabschnitts festgelegt. Die zweite Biegerichtung ist der ersten Biegerichtung entgegen gerichtet.

Diese Biegung unter Beibehaltung der Ausrichtung (Schwenkstellung) des Kontaktabschnitts entspricht dem im Zusammenhang mit der Vorrichtung beschriebenen ersten Bewegungsschritt. Es wird quasi der Bereich um das freie Ende, der Endabschnitt, der im zweiten Biegepunkt endet, in seiner in Längsrichtung gerichteten Ausrichtung gehalten. Der sich an den Endabschnitt anschließende Mittelabschnitt, der sich zwischen dem ersten Biegepunkt und dem zweiten Biegepunkt erstreckt, wird in die erste Biegerichtung bspw. radial auswärts gebogen/geschwenkt gegenüber dem Teil des Leiterstücks, welches unbeweglich im Statorkern gehalten angeordnet ist.

Das Verfahren umfasst weiter: Verschwenken des Kontaktabschnitts in die zweite Biegerichtung. Es ist auch denkbar den Kontaktabschnitt in eine andere, insbesondere zur Oberfläche des Statorkerns parallel gerichtete, Richtung zu schwenken. Beim Verschwenken des Kontaktabschnitts wird das freie Ende des Leiterstücks bzw. die freien Enden der Leiterstücke gegenüber dem weiteren Verlauf des Leiterstücks bzw. der Leiterstücke um den zweiten Biegepunkt in die zweite Biegerichtung gebogen. Während des Verschwenkens wird insbesondere der erste Biegepunkt weiter in die erste Biegerichtung bewegt. Dadurch wird das oben beschriebene Überbiegen am ersten und/oder zweiten Biegepunkt bewirkt und ein Rückfedern des Leiterstücks bzw. der Leiterstücke nach dem Biegen zumindest teilweise ausgeglichen. Mit anderen Worten, wird das Überbiegen am ersten Biegepunkt durch das Weiterbewegen des Kontaktabschnitts bewirkt und das Überbiegen am zweiten Biegepunkt wird durch das Verschwenken in die zweite Biegerichtung bewirkt.

Verschwenken bei zeitlicher weiterer Bewegung des ersten Biegepunkts entspricht dem im Zusammenhang mit der Vorrichtung beschriebenen zweiten Bewegungsschritt. Während des gesamten Biegevorgangs kann das Leiterstück bzw. die Leiterstücke von seitlich als auch von dem freien Ende her durch den Kontaktabschnitt kontaktiert werden. Die durch das Biegen verursachte und geometrisch bedingte Änderung der Lage des freien Endes insbesondere in Längsrichtung gegenüber dem Statorkern wird durch eine Bewegung des Kontaktabschnitts insbesondere in Längsrichtung kompensiert. Dies kann beispielsweise durch einen vorgespannten Kontaktabschnitt erreicht werden (bspw. wie dies bereits im Zusammenhang mit der Vorrichtung beschrieben wurde, insbesondere im Zusammenhang mit der im ersten Führungselement gelagerten Kolbenstange). Der Kontaktabschnitt kann z. B. mittels einer Feder in Richtung des Statorkerns vorgespannt sein, sodass dieser in Richtung Statorkern gedrückt wird und der Bewegung des freien Endes des Leiterstücks bzw. der freien Enden der Leiterstücke folgt. Die Länge des Endabschnitts ist damit auf konstruktiv einfache Art und Weise festgelegt.

Der erste Biegepunkt bleibt in seiner Position gegenüber dem Statorkern unverändert.

Der zweite Biegepunkt bewegt sich während des zweiten Bewegungsschritts, insbesondere während des Verschwenkens des Kontaktabschnitts relativ zum Statorkern. Während der Kontaktabschnitt in die zweite Biegerichtung geschwenkt wird und dabei weiter in die erste Biegerichtung bewegt wird, wird der zweite Biegepunkt insbesondere in die erste Biegerichtung und entlang der Längsrichtung zum Statorkern hin bewegt.

Das umzuformende bzw. umgeformte Leiterstück kann das radial äußerste der Leiterstücke einer in Radialrichtung erstreckten Reihe von Leiterstücken sein. Es ist aber auch denkbar, dass es sich dabei um das innerste der Leiterstücke einer in Radialrichtung erstreckten Reihe von Leiterstücken handelt. Typischer Weise werden mehrere radial äußere Leiterstücke einer Reihe umgeformt.

Weiter bevorzugt verlaufen die erste und die zweite Biegung in einer Ebene. Da zwischen den beiden Biegepunkten desselben Leiterstücks, das Leiterstück nur gerade (nicht gebogene) Abschnitte aufweist, ist der gesamte aus dem Stator ragende Bereich des Leiterstücks in dieser Ebene angeordnet. Bevorzugt wird diese Ebene durch die Längsrichtung und Radialrichtung aufgespannt.

Der Biegevorgang um den ersten Biegepunkt und/oder um den zweiten Biegepunkt, kann jeweils um einen größeren Winkel erfolgen, als dies in der endgültig gewünschten Form vorgesehen ist. Ein Rückfedern des Leiterstücks bzw. der Leiterstücke kann hierdurch zumindest teilweise ausgeglichen werden. Das Rückfedern wird durch verschiedene Gegebenheiten bedingt. Diese sind z. B. das Material des Leiterstücks (meist Kupfer), die Dicke des Leiterstücks, die Temperatur, etc. Es insbesondere vorgesehen, dass nach beenden des Biegevorgangs die einzelnen Leiterstücke derart umgeformt wurden, dass der Endabschnitt der Leiterstücke, also der Abschnitt um das freie Ende des Leiterstück herum in Längsrichtung bzw. parallel zur Längsrichtung verläuft.

Das Erfindungsgemäße Verfahren kann weiter umfassen, dass Leiterstücke verwendet werden die durch Zugtrennen konfektioniert wurden (Vor oder nach Formgebung bspw. Biegung in einen Hairpin). Insbesondere können die Leiterstücke vor dem Zugtrennen zunächst seitlich, insbesondere von allen Seiten her eingekerbt worden sein und anschließend durch Zugtrennen auf eine bestimmte Länge geteilt worden sein. Dadurch ergibt sich ein freies Ende der Leiterstücke welches eine quasi mittig bzw. im inneren des Querschnitts liegende Spitze/Trennfläche/Grat aufweist, was wiederum das Eingreifen des Kontaktabschnitts beim anfänglichen "über die Leiterstücke stülpen" erleichtert. Allgemein können die Leiterstücke eine im inneren des Querschnitts angeordnete Erhebung auf ihrem freien Ende aufweisen. Allgemein können die Leiterstücke sich auch zum freien Ende hin verjüngen.

Weitere Merkmale, Einzelheiten und Vorteile der Erfindung ergeben sich aus dem Wortlaut der Ansprüche sowie aus der folgenden Beschreibung der Ausführungsbeispiele anhand der Zeichnungen. Es zeigen:
Fig. 1 eine Seitenansicht einer Biegeeinheit und einer Gegenlagereinrichtung einer erfindungsgemäßen Vorrichtung;
Fig. 2 eine perspektivische Ansicht der Biegeeinheit und der Gegenlagereinrichtung gem. Fig. 1;
Fig. 3 eine Seitenansicht der Biegeeinheit und der Gegenlagereinrichtung gem. Fig. 1 in einem weiteren Zustand;
Fig. 4 eine Seitenansicht der Biegeeinheit und der Gegenlagereinrichtung gem. Fig. 1 in einem weiteren Zustand;
Fig. 5 eine Draufsicht auf eine Anordnung mehrerer Biegeeinheiten gem. Fig. 1 einer weiteren erfindungsgemäßen Vorrichtung;
Fig. 6 eine Draufsicht auf eine Anordnung einer Biegeeinheit gem. Fig. 1 einer weiteren erfindungsgemäßen Vorrichtung; und
Fig. 7 eine Draufsicht auf eine Anordnung mehrerer Biegeeinheiten gem. Fig. 1 einer weiteren erfindungsgemäßen Vorrichtung;
Fig. 8 eine schematische Darstellung eines Kontaktabschnitts;
Fig. 9 eine weitere schematische Darstellung des Kontaktabschnitts aus Figur 8;
Fig. 10 eine weitere schematische Darstellung des Kontaktabschnitts aus Figur 8;
Fig. 11 eine weitere schematische Darstellung des Kontaktabschnitts aus Figur 8;
Fig. 12 eine schematische Darstellung eines alternativen Kontaktabschnitts;
Fig. 13 eine weitere schematische Darstellung des Kontaktabschnitts aus Figur 12;
Fig. 14 eine schematische Darstellung eines alternativen Kontaktabschnitts; und
Fig. 15 eine Schnittdarstellung eines alternativen Kontaktabschnitts.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

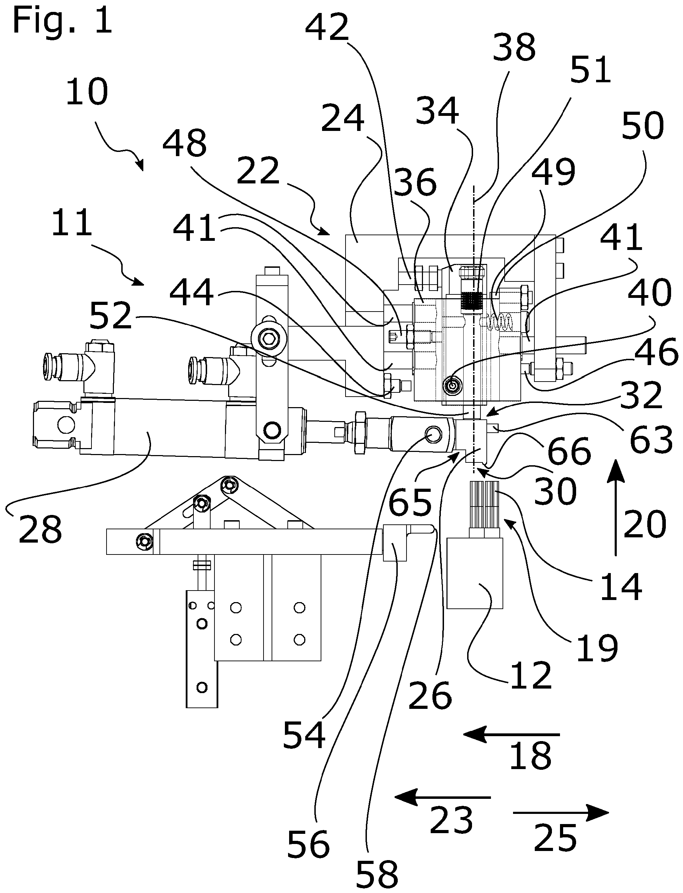

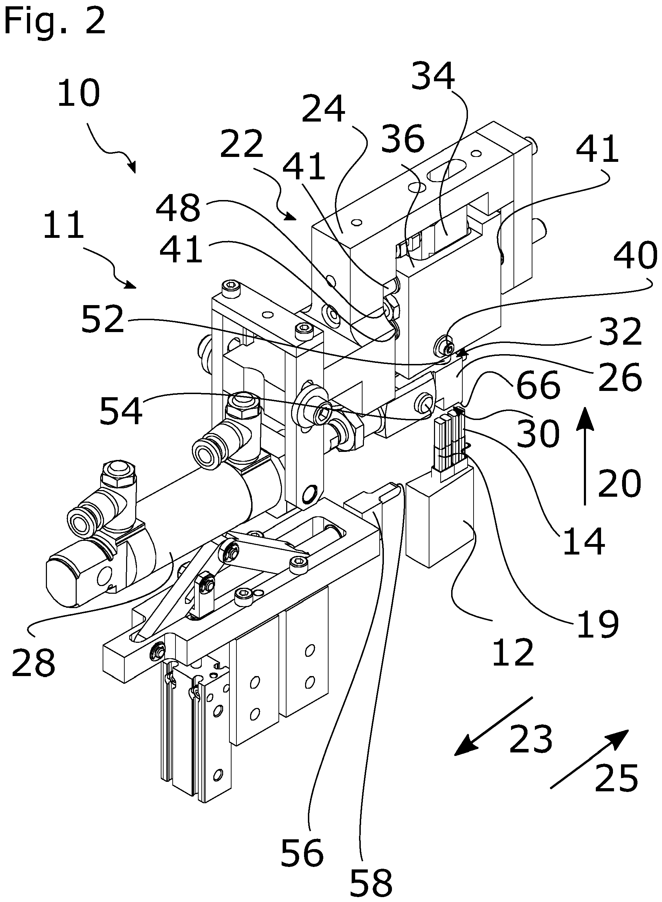

Figur 1 zeigt eine Seitenansicht einer Biegeeinheit 11 und einer Gegenlagereinrichtung 56 einer erfindungsgemäßen Vorrichtung 10 und Figur 2 zeigt eine perspektivische Ansicht der Biegeeinheit 11 und der Gegenlagereinrichtung 56 gemäß Figur 1. Es ist die Ausgangsstellung der Vorrichtung 10 gezeigt. In dieser Ausgangsstellung ist ein Statorkern 12 und darin angeordnete Leiterstücke 14 in einer nicht dargestellten Aufnahme in einer vorgesehenen Bearbeitungsposition aufgenommen und umzuformende Leiterstücke sind noch nicht umgeformt.

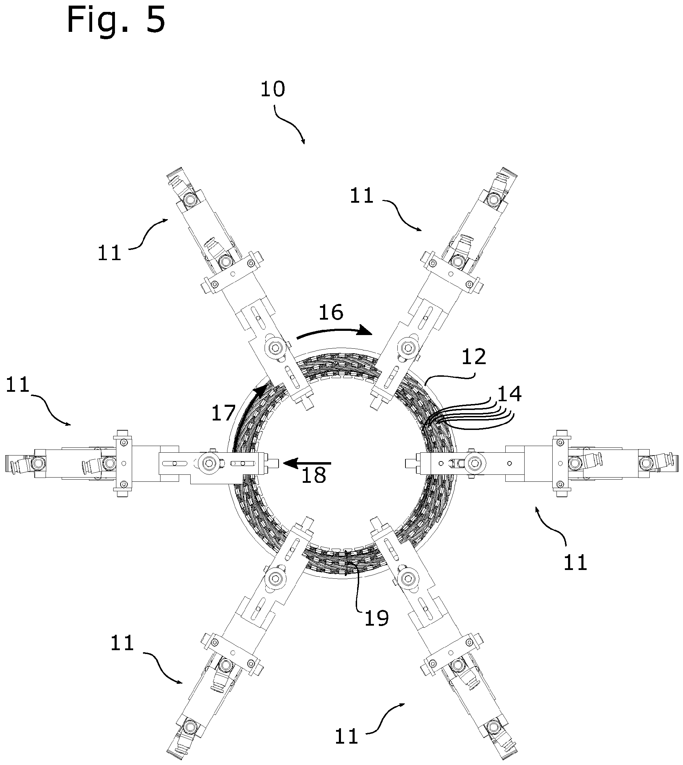

Die Leiterstücke 14 sind in einer Umfangsrichtung 16 verlaufenden Kreisbahnen 17 in Reihen 19 in dem Statorkern 12 angeordnet (siehe Figur 5 - 7). Die Reihen 17 erstrecken sich entlang einer Radialrichtung 18. Die Leiterstücke 14 sind überwiegend sogenannte Hairpins, die zwei länglich erstreckte Schenkel aufweisen, die wiederum über einen Verbindungsabschnitt miteinander verbunden sind. In der Bearbeitungsposition ragen die umzuformenden Leiterstücke 14 (typischerweise Schenkel der Hairpins) aus dem Statorkern 12 entlang einer Längsrichtung 20 heraus. Dies entspricht der Ausgangskonfiguration der Leiterstücke 14, in der sie sich vor dem Umformen befinden. Es sind in den Figuren jeweils die freien Schenkel der Leiterstücke 14, also die länglich erstreckten dem ggf. vorhandenen verbindenden Verbindungsabschnitt abgewandten Enden der Leiterstücke 14 zusehen. Ebenfalls ist teilweise und eher schematisch der Statorkern 12 in den Figuren 1-4 zu sehen.

Die Biegeeinheit 11 weist eine Positioniereinheit 22 auf. Diese dient zur Positionierung der Biegeeinheit 11 gegenüber der Aufnahme bzw. dem in der nicht dargestellten Aufnahme angeordneten Statorkern 12. Während des Umformvorgangs bzw. des Biegevorgangs ist die Positioniereinheit 22 fest gegenüber der Aufnahme bzw. dem Statorkern 12 angeordnet.

Die Biegeeinheit 11 weist weiter einen Kontaktabschnitt 26 auf, der ausgebildet ist um ein umzuformendes Leiterstück 14 bzw. mehrere umzuformende Leiterstücke 14 seitlich und von oben in Richtung zum Statorkern 12 hin kontaktieren zu können.

Der dargestellte Kontaktabschnitt 26 ist hülsenartig ausgestaltet und weist ein erstes offenes Ende 30 auf. Dieses ist in Betriebsstellung dem Statorkern 12 zugewandt. Ein zweites geschlossenes Ende 32, welches dem ersten offenen Ende 30 entgegengesetzt ist, ist in Betriebsstellung dem Statorkern 12 abgewandt. Der Kontaktabschnitt 26 kann somit quasi über ein einzelnes Leiterstück 14 oder mehrere Leiterstücke 14 gestülpt werden, wobei das zweite geschlossene Ende 32 einen Anschlag für die freien Enden der Leiterstücke 14 bildet. Der Kontaktabschnitt 26 ist mittels eines Aktuators 28 bewegbar. Mittels des Aktuators 28 ist der Kontaktabschnitt 26 in eine erste Biegerichtung 23 und in eine zweite Biegerichtung 25 bewegbar.

In dem hier dargestellten Ausführungsbeispiel entspricht die erste Biegerichtung 23 der Radialrichtung 18. Die zweite Biegerichtung 25 ist der ersten Biegerichtung 23 entgegengesetzt.

Vorliegend ist der Aktuator 28 in Form eines Linearaktuators ausgebildet, der schwenkbar an der Positioniereinheit 22 angeordnet und ebenfalls schwenkbar mit dem Kontaktabschnitt 26 verbunden ist.

Die Positioniereinheit 22 umfasst ein Rahmenelement 24, welches während des Umformvorgangs bzw. des Biegevorgangs ortsfest bezüglich des Statorkerns 12 verbleibt. In dem Rahmenelement 24 sind ein erstes Führungselement 34 und ein zweites Führungselement 36 angeordnet.

Das erste Führungselement 36 erstreckt sich länglich entlang einer Erstreckungsachse 38. Das erste Führungselement 34 ist in dem zweiten Führungselement 36 in einem Schwenkpunkt 40 schwenkbar gelagert angeordnet. Die beiden Führungselemente sind somit über diesen Schwenkpunkt 40 schwenkbar miteinander verbunden. Damit ist die einzig mögliche Relativbewegung zwischen den beiden Führungselementen eine Schwenkbewegung.

Der Schwenkpunkt 40 ist in Bezug auf das zweite Führungselement 36 fest angeordnet.

Das zweite Führungselement 36 ist entlang bzw. entgegen der ersten Biegerichtung 23 im Rahmenelement 24 translatorisch bewegbar angeordnet. Diese translatorische Bewegung des zweiten Führungselements 36 wird mittels einer Führung bewirkt. In dem dargestellten Ausführungsbeispiel wird die Führung durch drei Führungsstangen 41 realisiert. Die Führungsstangen 41 erstrecken sich in das zweite Führungselement 36, wobei ein Verschieben des Führungselements 36 entlang der Führungsstangen 41 möglich ist, wodurch das zweite Führungselement 36 entlang der ersten Biegerichtung 23 bzw. der zweiten Biegerichtung 25 geradlinig geführt gelagert ist.

Die Führungsstangen 41 erstrecken sich in ihrer Längsausrichtung entlang der ersten Biegerichtung 23 bzw. der zweiten Biegerichtung 25. Sie sind daher parallel zueinander. Die Führungsstangen 41 sind fest an dem Rahmenelement 24 angeordnet.

Da der Schwenkpunkt 40 bezüglich des zweiten Führungselements 36 fest angeordnet ist, folgt dieser der translatorischen Bewegung des zweiten Führungselements 36. Entsprechend wird bei Bewegung des zweiten Führungselements 36 der Schwenkpunkt 40 und damit auch das erste Führungselement 34 relativ zum Rahmenelement 24 bzw. zu Positioniereinheit 22 bewegt.

Das Rahmenelement 24 ist im weitesten Sinne U-förmig ausgebildet und begrenzt einen Freiraum, in dem das erste Führungselement 34 und das zweite Führungselement 36 angeordnet sind, jedenfalls in der ersten Biegerichtung 23 und der zweiten Biegerichtung 25.

Das Rahmenelement 24 umfasst einen ersten Anschlag 42. Dieser ist am Rahmenelement 24 angeordnet und dient zur Kontaktierung des ersten Führungselements 34, wenn dieses in die erste Biegerichtung 23 bewegt wird.

Das Rahmenelement 24 umfasst weiter einen zweiten Anschlag 44. Er dient zur Kontaktierung des zweiten Führungselements 36, wenn dieses in die erste Biegerichtung 23 bewegt wird.

Der erste Anschlag 42 und der zweite Anschlag 44 liegen auf der gleichen Seite des Rahmenelements 24.

Das Rahmenelement 24 umfasst einen dritten Anschlag 46. Er dient zur Kontaktierung des zweiten Führungselements 36, wenn dieses in die zweite Biegerichtung 25 bewegt wird. Entsprechend ist der dritte Anschlag 46 auf der dem ersten Anschlag 42 und dem zweite Anschlag 44 gegenüberliegenden Seite des Rahmenelements 24 angeordnet. Das zweite Führungselement 36 ist also zwischen dem ersten Anschlag 42 und dem zweite Anschlag 44 hin und her bewegbar angeordnet. Da das Rahmenelement 24 während des Biegevorgangs fest bezüglich des Statorkerns 12 ist, sind auch alle an dem Rahmenelement 24 fest angeordneten Teile, wie z. B. die drei Führungsstangen 41, der erste Anschlag 42, der zweite Anschlag 44 und der dritte Anschlag 46, während des Biegevorgangs ortsfest bezüglich des Statorkerns 12 angeordnet.

Das zweite Führungselement 36 weist einen vierten Anschlag 48 auf. Dieser dient der Kontaktierung des ersten Führungselements 34, wenn dieses in die erste Biegerichtung 23 um den Schwenkpunkt 40 geschwenkt wird.

Das zweite Führungselement 36 weist weiter eine erste Feder 49 auf, die in zweiter Biegerichtung 25 am zweiten Führungselement 36 angeordnet ist. Mittels der ersten Feder 49 wird das erste Führungselement 34 gegen den vierten Anschlag 48 in die erste Biegerichtung 23 gespannt. Diese am vierten Anschlag 48 anliegende Position des ersten Führungselements 34 wird im Folgenden auch als Anlageposition bezeichnet. In dieser in Figur 1 gezeigten Anlageposition des ersten Führungselements 34 ist das erste Führungselement 34 derart ausgerichtet, dass seine Erstreckungsachse 38 parallel zur Längsrichtung 20 und somit parallel zu den freien aus dem Statorkern 12 herausragenden Enden der Leiterstücke 14 ausgerichtet ist. Insbesondere ist die Erstreckungsachse 38 orthogonal zur ersten Biegerichtung 23 angeordnet.

Das erste Führungselement 34 ist mittels einer Kolbenstange 52 mit dem Kontaktabschnitt 26 verbunden. Die Kolbenstange 52 ist innerhalb des ersten Führungselements 34 angeordnet und verläuft entlang der Erstreckungsachse 38. Damit entspricht die Ausrichtung der Kolbenstange 52 und des Kontaktelements 26 stets der Ausrichtung des ersten Führungselements 34 bzw. dessen Erstreckungsachse 38. Wird das erste Führungselement 34 um den Schwenkpunkt 40 geschwenkt, schwenkt seine Erstreckungsachse 38 und auch die Kolbenstange 52 nebst dem Kontaktabschnitt 26 um den Schwenkpunkt 40 entsprechend mit. Die Kolbenstange 52 ist mittels einer zweiten Feder 51 gegenüber dem ersten Führungselement 34 zum Statorkern 12 hin vorgespannt. Die Kolbenstange 52 und damit auch der Kontaktabschnitt 26, an dem die Kolbenstange 52 angeordnet ist, ist entlang der Erstreckungsachse 38 gegenüber dem ersten Führungselement 34 entgegen der Federspannung bewegbar. Die Kolbenstange 52 ist fest mit dem Kontaktabschnitt 26 verbunden. Damit überträgt sich eine Bewegung der Kolbenstange 52 auf den Kontaktabschnitt 26.

Der Kontaktabschnitt 26 kann also gegenüber dem Rahmenelement 24 bzw. der Positioniereinheit 22 sowohl abgesenkt (von dieser weg zum Statorkern 12 hin) als auch in der ersten Biegerichtung 23 und der zweiten Biegerichtung 25 bewegt werden. Zusätzlich kann der Kontaktabschnitt 26 gegenüber dem Rahmenelement 24 bzw. der Positioniereinheit 22 verschwenkt werden. All dies wird in der vorliegenden Ausführungsform mittels des an der Positioniereinheit 22 angelenkten Aktuators 28 bewirkt. Entsprechend ist der Aktuator 28 gelenkig (schwenkbar) am Rahmenelement 24 bzw. der Positioniereinheit 22 angeordnet. Der Aktuator 28 ist weiter mittels eines Gelenks 54 mit dem Kontaktabschnitt 26 schwenkbar verbunden. Das Gelenk 54 ist vorliegend als Gabelkopf ausgeführt, mit dem der Kontaktabschnitt 26 schwenkbar gelagert verbunden ist. Zum anderen, ist der Aktuator 28 schwenkbar am Rahmenelement 24 angeordnet, um insbesondere der Bewegung des Kontaktabschnitts 26 entlang der Erstreckungsachse 38 folgen zu können.

Der Kontaktabschnitt 26 kann also gegenüber dem Rahmenelement 24 bzw. der Positioniereinheit 22 mehrere Bewegungen durchführen. Eine erste Bewegung (bzw. Bewegungsart) ist eine translatorische Bewegung entlang der ersten Biegerichtung 23 bzw. der zweiten Biegerichtung 25. Eine zweite Bewegung ist eine translatorische Bewegung entlang der Erstreckungsachse 38. Eine dritte Bewegung ist ein Verschwenken des Kontaktabschnitts 26 um den Schwenkpunkt 40 (wobei die Erstreckungsachse 38 dabei ebenso verschwenkt wird).

Beim Biegevorgang führt der Kontaktabschnitt 26 eine Bewegung durch, die aus einer Überlagerung dieser drei Bewegungen resultiert.

Beim Absenken des Kontaktabschnitts 26 auf die Leiterstücke 14 stoßen die freien Enden der Leiterstücke 14 an das geschlossene Ende des Kontaktabschnitts 26 und bewegen diesen entgegen der Vorspannung durch die zweite Feder 51 entlang der Erstreckungsachse 38 zum Rahmenelement 24 hin. Entsprechend wird, wenn die Leiterstücke 14 ihre Erstreckung vom Statorkern 12 zur Positioniereinheit 22 durch das radial auswärts gerichtete verbiegen verkürzen, der Kontaktabschnitt 26 durch die Feder 51 weiter im Kontakt mit den freien Enden der Leiterstücke 14 gehalten und entlang der Erstreckungsachse 38 vom Rahmenelement 24 zum Statorkern 12 hin bewegt. Es findet quasi ein Längenausgleich statt.

Im ersten Bewegungsschritt erfolgt lediglich eine translatorische Bewegung entlang der ersten Biegerichtung 23 sowie entlang der Erstreckungsachse 38. Im zweiten Bewegungsschritt wird zusätzlich die Schwenkbewegung um den Schwenkpunkt 40 überlagert.

Das zweite Führungselement 36 umfasst einen fünften Anschlag 50. Dieser dient zur Kontaktierung des ersten Führungselements 34, wenn dieses in die zweite Biegerichtung 25 geschwenkt wird. Er begrenzt quasi dessen Verschwenkbarkeit.

Die Anschläge sind in ihrer Position einstellbar ausgebildet (bspw. mittels eines Werkzeugs längenveränderbar) werden.

Die Vorrichtung 10 umfasst weiter eine Gegenlagereinrichtung 56. Die Gegenlagereinrichtung 56 weist einen Gegenlagerabschnitt 58 auf. Die Gegenlagereinrichtung 56 ist vorliegend derart bewegbar in der Vorrichtung 10 angeordnet und gelagert, dass sie mit dem Gegenlagerabschnitt 58 an das radial äußerste Leiterstück 14 anlegbar ist. Durch das Anlegen des Gegenlagerabschnitts 58 an das Leiterstück 14 wird ein erster Biegepunkt 60 definiert.

Die Gegenlagereinrichtung 56, der Aktuator 28 und das Rahmenelement 14 sind im Wesentlichen in einer Ebene angeordnet. Das führt zu einer besonders schmalen Bauweise der Biegeeinheit 11 und/oder der Vorrichtung 10.

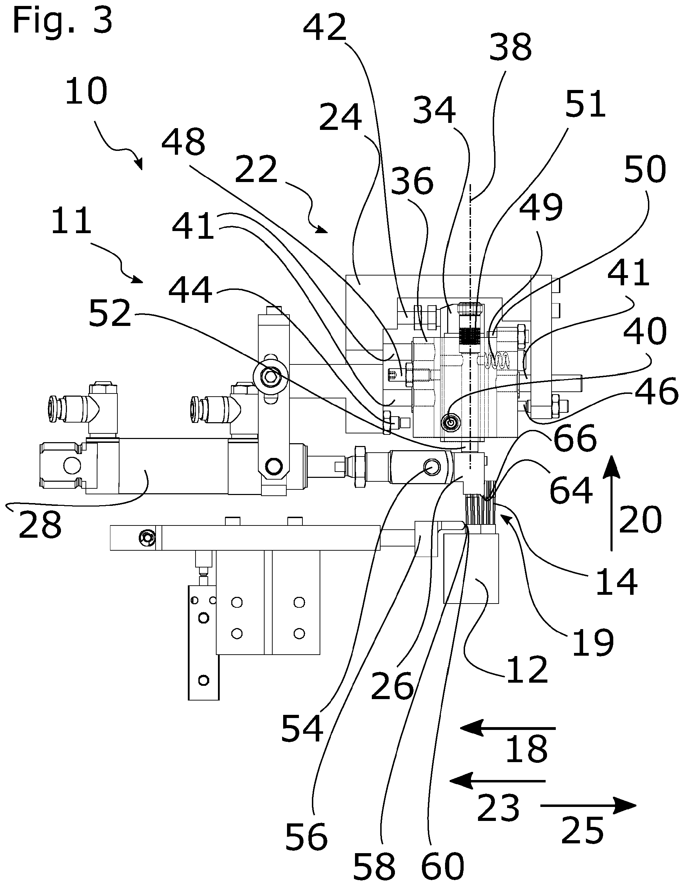

Figur 3 zeigt eine Seitenansicht der Biegeeinheit 11 und der Gegenlagereinrichtung 56 gemäß Figur 1 in einem weiteren Zustand. Die Position der Biegeeinheit 11 wurde im Vergleich zu der in den Figuren 1 und 2 gezeigten Ausgangsstellung zum Statorkern 12 hin verändert, mit anderen Worten, die Biegeeinheit wurde zu Statorkern hin bewegt, in der Darstellung der Figuren auf den Statorkern abgesenkt. Im Sinne der Erfindung ist jedoch auch eine Anordnung der Biegeeinheit unterhalb (Absenken Statorkern oder Anheben Biegeeinheit) seitlich (aufeinander zu bewegen von Statorkern und Biegeeinheit) des Stators.

Durch das Absenken (allgemein Verändern der Relativposition zueinander) wurde der Kontaktabschnitt 26 über die zwei in erste Biegerichtung 23 äußersten bzw. vorliegend radial äußersten Leiterstücke 14 bewegt bzw. diese in dem Kontaktabschnitt 26 aufgenommen. Die Positioniereinheit 22 ist so weit in Richtung Statorkern 12 bewegt worden, dass diese beiden Leiterstücke 14 mit ihrem Endabschnitten 62 im Kontaktabschnitt 26 aufgenommen sind.

Der Endabschnitt 62 entspricht mit seiner Erstreckung in Längsrichtung dabei dem im Kontaktabschnitt aufgenommenen Teil der Leiterstücke 14, also der inneren Ausdehnung des Kontaktabschnitts 26 in Längsrichtung. Das geschlossene Ende 32 des Kontaktabschnitts 26 bildet einen Anschlag in der Längsrichtung 20 für die freien Enden der Leiterstücke 14.

Zudem wurde die Positioniereinheit 22 so weit in Richtung Statorkern 12 hinbewegt, dass die zweite Feder 51 durch das Andrücken des Kontaktabschnitts 26 und somit der Kolbenstange 52 in Längsrichtung 20 gespannt ist. Damit sind die freien Enden der im Kontaktabschnitt 26 aufgenommenen bzw. kontaktierten Leiterstücke 14 mit einer Kraft in Richtung zum Statorkern 12 hin beaufschlagt.

Die Endabschnitte 62 sind in seitlicher Richtung klemmend in dem Kontaktabschnitt fixiert. Dies ist durch die Veränderung der Stellung eines aus dem Kontaktabschnitt 26 hinausragend Fortsatzes 63 einer im Kontaktabschnitt 26 angeordneten Klemmeinrichtung 65 erkennbar. Die Klemmeinrichtung 65 ist derart ausgebildet, dass die im Kontaktabschnitt 26 befindlichen Leiterstücke von innen gegen die radial einwärts angeordnete Wand des Kontaktabschnitts gedrängt sind und an dieser anliegen.

Die Gegenlagereinrichtung 56 wurde in Figur 3 derart in Richtung Statorkern 12 bewegt, dass der Gegenlagerabschnitt 58 an dem in die erste Biegerichtung 23 äußersten Leiterstück 14 anliegt und somit den ersten Biegepunkt 60 räumlich festlegt.

Durch das Hineinbewegen des Kontaktabschnitts 26 zwischen die einzelnen Leiterstücke 14 entsteht ein kleiner Spalt zwischen den umzuformenden Leiterstücken 14 und den restlichen Leiterstücken 14 in der Reihe 19. Hierzu weißt der Kontaktabschnitts 26 vorliegend eine abgerundete Kante 66 auf. Die Kante 66 ist verrundet ausgebildet, wobei die Verrundung vorliegend durch einen halbkreisartigen Querschnitt geschaffen ist. Dieser ist vorliegende mit einem Radius von 0,5mm ausgebildet. Andere sich zu den Leiterstücken hin verjüngende Querschnitte sind ebenso im Sinne der Erfindung. Die Kante 66 definiert auch den zweiten Biegepunkt 64, worauf weiter unten noch eingegangen wird.

Die durch den Kontaktabschnitt 26 aufgenommenen bzw. kontaktierten Leiterstücke 14 werden daher bereits jetzt minimal um den ersten Biegepunkt 60 gebogen. Diese Biegung ist jedoch vernachlässigbar und es ist nicht von dieser Biegung die Rede, wenn von dem Biegevorgang und/oder dem Umformvorgang die Rede ist.

Aus dieser in Figur 3 gezeigten Startstellung der Vorrichtung 10 wird der eigentliche Biegevorgang gestartet.

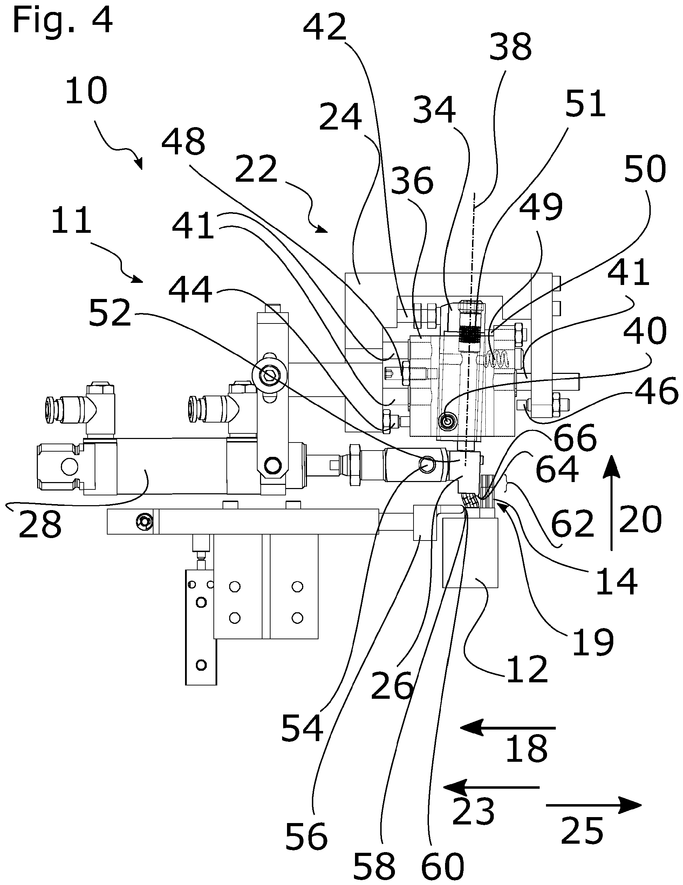

Figur 4 zeigt eine Seitenansicht der Biegeeinheit 11 und der Gegenlagereinrichtung 56 gemäß Figur 1 in einem weiteren Zustand. Es ist die finale Stellung der Vorrichtung 10 zu sehen, nachdem der Biegevorgang durchgeführt worden ist.

Der Biegevorgang wird durch die Betätigung des Aktuators 28 gestartet. Der Aktuator 28 bewegt den Kontaktabschnitt 26 in die erste Biegerichtung 23. Da der Kontaktabschnitt 26 über die Kolbenstange 52 mit dem ersten Führungselement 34 verbunden ist, wird dieses ebenfalls in die erste Biegerichtung 23 bewegt.

Das erste Führungselement 34 ist über den Schwenkpunkt 40 mit dem zweiten Führungselement 36 verbunden und mittels der ersten Feder 49 in die Anlageposition gegen den vierten Anschlag 48 gespannt. Dadurch überträgt sich die Bewegung des ersten Führungselements 34 in die erste Biegerichtung 23 auf das zweite Führungselement 36. Das zweite Führungselement 36 ist durch die drei Führungsstangen 41, parallel zur ersten Biegerichtung 23 bzw. zweite Biegerichtung 25, geradlinig geführt. Der Kontaktabschnitt 26, die Kolbenstange 52, das erste Führungselement 34 und das zweite Führungselement 36 bewegen sich in einem ersten Bewegungsschritt in die erste Biegerichtung 23.

Dabei werden die im Kontaktabschnitt 26 aufgenommenen bzw. kontaktierten Leiterstücke 14 ebenfalls in die erste Biegerichtung 23 bewegt. Diese Leiterstücke 14 werden um den ersten Biegepunkt 60 in die erste Biegerichtung 23 gebogen. Ein zweiter Biegepunkt 64 wird durch die Kante 66 des Kontaktabschnitts 26 definiert. Die im Kontaktabschnitt 26 aufgenommenen bzw. durch diesen kontaktierten Leiterstücke 14 sind entlang ihrer Endabschnitte 62 mit dem Kontaktabschnitt 26 in Berührung und im Kontaktabschnitt 26 in Ihrer Ausrichtung bzgl. diesem fest. Damit verschiebt die Bewegung des Kontaktabschnitts 26 in die erste Biegerichtung 23 die Endabschnitte 62 translatorisch (die Richtung wird noch näher im Detail erläutert). Dabei bleibt die Ausrichtung der Endabschnitte 62 parallel zu Längsrichtung 20, so dass die Endabschnitte während der Bewegung (1. Bewegungsschritt) des Kontaktabschnitts 26 in die erste Biegerichtung 23 um den zweiten Biegepunkt 64 gegenüber den Mittelabschnitten (zwischen ersten und zweiten Biegepunkten) in die zweite Biegerichtung 25 gebogen werden. Durch die so entstandene erste und zweite Biegung werden die Leiterstücke 14 aufgeweitet.

Während des ersten Bewegungsschrittes des Biegevorgangs bewegen sich die freien Enden der im Kontaktabschnitt 26 aufgenommenen bzw. kontaktierten Leiterstücke 14 geometrisch bedingt in Richtung zum Statorkern 12 hin. Der zweite Biegepunkt 64 bewegt sich daher auf den Statorkern 12 zu. Mit anderen Worten, die aufgeweiteten Leiterstücke 14 werden in Bezug zur Längsrichtung 20 durch das Verbiegen kürzer. Da der Kontaktabschnitt 26 mit der zweiten Feder 51 über die Kolbenstange 52 in Richtung zum Statorkern 12 hin beaufschlagt ist, folgt der Kontaktabschnitt 26 dieser Bewegung der freien Enden der Leiterstücke 14, so dass die Endabschnitte 62 während des gesamten Biegevorgangs in dem Kontaktabschnitt 26 aufgenommen sind bzw. durch diesen kontaktiert werden. Mit anderen Worten, die Endabschnitte 62 der Leiterstücke 14 bewegen sich nicht relativ zum Kontaktabschnitt 26.

Der Kontaktabschnitt 26, die Kolbenstange 52, das erste Führungselement 34 und das zweite Führungselement 36 werden so lange in die erste Biegerichtung 23 bewegt, bis das erste Führungselement 34 an dem ersten Anschlag 42 anstößt. Da der Kontaktabschnitt 26, die Kolbenstange 52 und das zweite Führungselement weiter in die erste Biegerichtung 23 bewegt werden, zwingt der erste Anschlag 42 das erste Führungselement 34 in eine Schwenkbewegung gegenüber dem zweiten Führungselement 36 in die zweite Biegerichtung und um den Schwenkpunkt 40. Der Schwenkpunkt 40 ist bzgl. des zweiten Führungselements 36 ortsfest und bewegt sich somit ebenfalls in die erste Biegerichtung. In diesem zweiten Bewegungsschritt des Biegevorgangs wird mit der Verschwenkung des ersten Führungselements 34 auch die darin angeordnete Kolbenstange 52 und somit auch der Kontaktabschnitt 26 mitverschwenkt. Die Endabschnitte 62 der im Kontaktabschnitt 26 aufgenommenen bzw. kontaktierten Leiterstücke 14 werden ebenfalls in die zweite Biegerichtung 25 mitverschwenkt. Der Schwenkvorgang wird durch den fünften Anschlag 50 beendet. Das erste Führungselement 34 schwenkt in die zweite Biegerichtung 25 so lange, bis das erste Führungselement 34 an dem fünften Anschlag 50, der am zweiten Führungselement 36 ortsfest angeordnet ist, anstößt und somit seine finale Schwenkstellung erreicht. Schlussendlich endet der zweite Bewegungsschritt, wenn das zweite Führungselement 36 den zweiten Anschlag 44 kontaktiert.

Durch den ersten Bewegungsschritt in die erste Biegerichtung 23 werden die im Kontaktabschnitt 26 aufgenommenen bzw. kontaktierten Leiterstücke 14 soweit in die erste Biegerichtung 23 bewegt, dass genügend Platz für den Schwenkvorgang in die zweite Biegerichtung 25 des zweiten Bewegungsschritts für die Endabschnitte 62 der vom Kontaktabschnitt 26 aufgenommenen bzw. kontaktierten Leiterstücke 14 vorhanden ist.

Nach dem zweiten Bewegungsschritt werden die Positioniereinheit 11 und die Gegenlagereinrichtung 56 vom Statorkern 12 weg bewegt, sodass die umgeformten (aufgeweiteten) Leiterstücke 14 freigegeben werden.

Die Ausrichtung der Endabschnitte 62 der aufgeweiteten Leiterstücke 14 ist nach dem zweiten Bewegungsschritt bzw. dem Verschwenken in die zweite Biegerichtung 25 gegenüber der Längsachse 20 geneigt. Durch das Rückfedern des Materials der Leiterstücke 14 um den ersten und zweiten Biegepunkt schwenken die Endabschnitte 62 der aufgeweiteten Leiterstücke 14 wieder entgegen der durchgeführten Biegung zurück, so dass die Ausrichtung der Endabschnitte 62 der aufgeweiteten Leiterstücke 14 üblicher Weise wieder parallel zur Längsachse 20 ist.

Figur 5 zeigt eine Draufsicht auf eine Anordnung mehrerer Biegeeinheiten 11 einer weiteren erfindungsgemäßen Vorrichtung 10. Bei den Biegeeinheit 11 handelt es sich um Biegeeinheiten 11 gemäß Figur 1. Aufgrund der schmalen Bauweise der Biegeeinheiten 11 kann eine Vielzahl der Biegeeinheiten 11 radial erstreckt und in Umfangsrichtung verteilt um den Statorkern 12 herum angeordnet werden. In Figur 5 ist eine Anordnung mit sechs Biegeeinheiten 11 gezeigt. Damit ist ein gleichzeitiges Aufweiten von einem Leiterstück 14 bzw. mehreren Leiterstücken 14 an sechs Reihen 19 von Leiterstücken 14 zeitgleich möglich. Der verfügbare Bauraum kann somit optimal genutzt werden. Der Platz zwischen den gezeigten Biegeeinheiten 11 kann beispielsweise durch ein Anordnen von weiteren Maschinen und/oder Werkzeugen genutzt werden.

Es ist ebenso denkbar die Biegeeinheit 11 derart anzuordnen, dass das in einer Reihe 19 von Leiterstücken 14 innerste Leiterstück 14 oder mehrere innere Leiterstücke 14 in radialer Richtung einwärts, also entgegen der Radialrichtung 18, aufgeweitet werden können. Auch hier können mehrere Biegeeinheiten 11 radial um den Statorkern 12 aufgrund ihrer kompakten und insbesondere schmalen Bauweise platzsparend angeordnet werden.

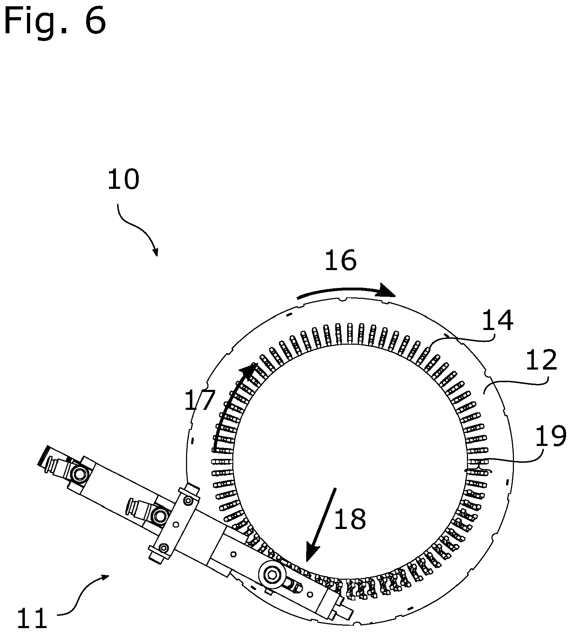

Figur 6 zeigt eine Draufsicht auf eine Anordnung einer Biegeeinheit 11 einer weiteren erfindungsgemäßen Vorrichtung 10. Bei der hier gezeigten Biegeeinheit 11 handelt es sich um eine Biegeeinheiten 11 gemäß Figur 1. Zu sehen ist eine tangentiale Anordnung der Biegeeinheit 11 an dem Statorkern 12. Damit ist ein Aufweiten eines Leiterstücks 14 oder mehrerer Leiterstücke 14 in umfänglicher Richtung, also orthogonal zur Radialrichtung 18 möglich. Auch hier können mehrere Biegeeinheiten 11 aufgrund der kompakten Bauweise der Biegeeinheit 11 optimal an dem Statorkern 12 angeordnet werden.

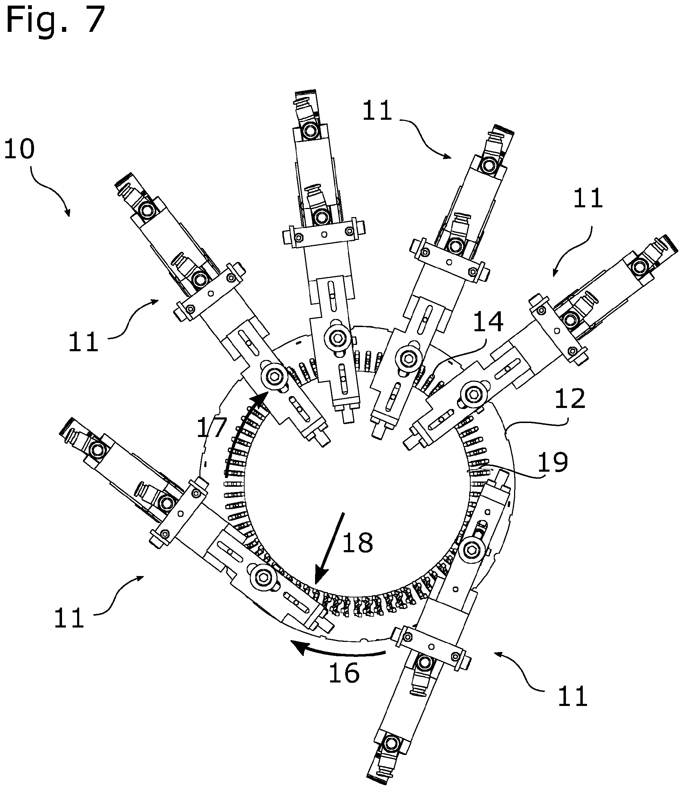

Figur 7 zeigt eine Draufsicht auf eine Anordnung mehrerer Biegeeinheiten 11 einer weiteren erfindungsgemäßen Vorrichtung 10. Bei den Biegeeinheit 11 handelt es sich um Biegeeinheiten 11 gemäß Figur 1. Zu sehen ist eine tangentiale und eine radiale Anordnung der Biegeeinheiten 11 in Kombination miteinander. So können mehrere Leiterstücke 14 gleichzeitig entlang der Radialrichtung 18 und orthogonal dazu aufgeweitet werden.

In den Vorrichtungen wie bspw. nach Figur 5 bis 7 kann der Statorkern 12 drehbar angeordnet sein, so dass durch eine Drehung des Statorkerns 12, die einzelnen Reihen 19 jeweils unter die Biegeeinheiten 11 bewegt werden könne. Zusätzlich oder alternativ können die Biegeeinheiten 11 in der Vorrichtung bewegbar angeordnet sein.

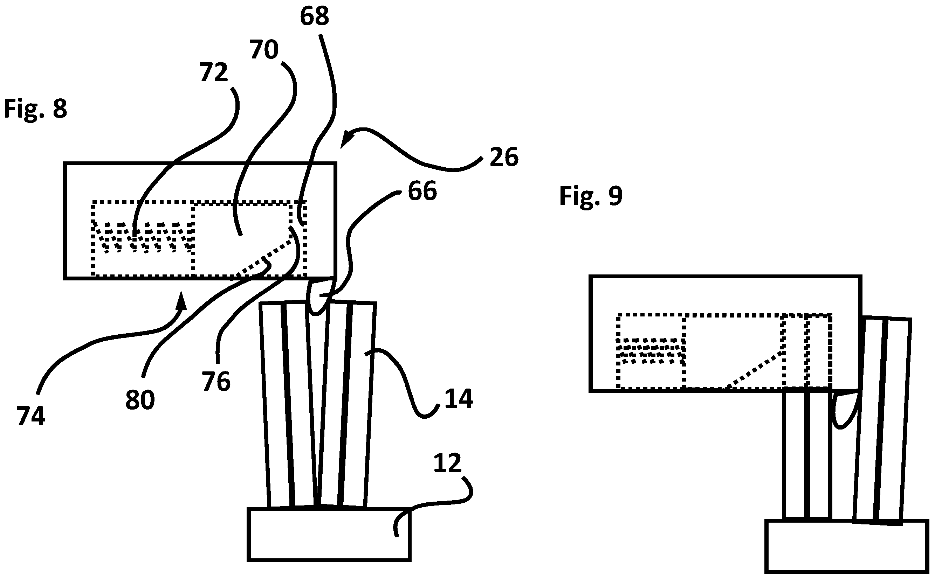

Figuren 8 bis 11 zeigen einen Kontaktabschnitt 26, wie er zur Durchführung der Erfindungsgemäßen Verfahren und in den erfindungsgemäßen Vorrichtungen 10 verwendet werden kann.

Der Kontaktabschnitt weist eine sich zu den Leiterstücken 14 hin verjüngende Kante 66 auf. Die Kante 66 dient dem Eingriff zwischen benachbart angeordnete Leiterstücke 14.

In der Darstellung von Figur 8 greift die Kante 66 gerade zwischen 2 benachbart liegende Leiterstücke 14 und spreizt die radial außenliegenden Leiterstücke 14 leicht von radialinnenliegenden Leiterstücken 14 ab. Die radial außenliegenden Leiterstücke 14 werden anschließend im Kontaktabschnitt aufgenommen, was in Figur 9 gezeigt ist.

Der Kontaktabschnitt 26 umfasst eine Klemmeinrichtung 65. Die Klemmeinrichtung 65 wiederum umfasst in der vorliegenden Ausführungsform ein Klemmelement 70, welches über eine Feder 72 in einem Aufnahmebereich 74, der vorliegend als sacklochartige Aufnahme ausgebildet ist, verspannt angeordnet ist. Eine Klemmfläche 76 des Klemmelements 70 ist dabei in Richtung einer inneren Anlagewand 68 des Kontaktabschnitts federvorgespannt. An die Klemmfläche 76 anschließend umfasst das Klemmelement 70 eine geneigte Einführfläche 80.

Die geneigte Einführfläche 80 ist derart angeordnet und ausgebildet, dass, wenn die Leiterstücke 14 die Einführfläche 80 kontaktieren, das Klemmelement 70 von der Anlagewand 68 entgegen der Federvorspannung weggedrängt wird, bis die Leiterstücke zwischen Klemmfläche 76 und Anlagewand 68 verklemmt bzw. beklemmend gehalten sind. Die freien Enden der Leiterstücke 14 liegen dann an einer oberen Wand des Aufnahmebereichs 74 an, die quasi einen Höhenanschlag bildet und die Erstreckung des in dem Kontaktabschnitt bzw. dessen Aufnahmebereich aufgenommenen Endabschnitts 62 definiert.

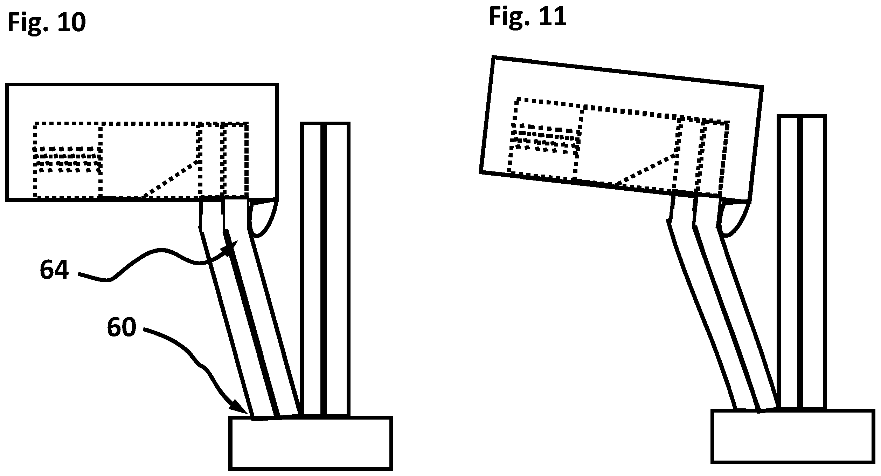

In Figur 10 ist die Endstellung nach Durchführung des ersten Bewertungsschritts illustriert. Im Anschluss daran erfolgt der zweite Bewegungsschritt, dessen Endstellung in Figur 11 illustriert ist.

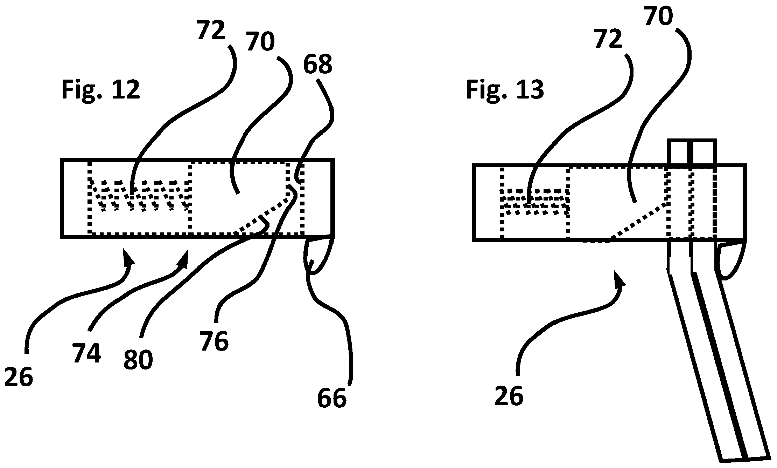

Figuren 12 und 13 zeigen einen alternativen Kontaktabschnitt 26, wie er zur Durchführung der Erfindungsgemäßen Verfahren und in den erfindungsgemäßen Vorrichtungen 10 verwendet werden kann. Der Kontaktabschnitt 26 bzw. dessen Aufnahmebereich 74 ist nach oben offen, so dass die Leiterstücke 14 durch den Aufnahmebereich 74 hindurch steckbar sind. Im aufgenommenen Zustand entspricht deren Konfiguration der in Figur 13 dargestellten. Figur 13 entspricht dabei dem Ende des ersten Bewegungsschritts, ähnlich wie in Figur 10 dargestellt.

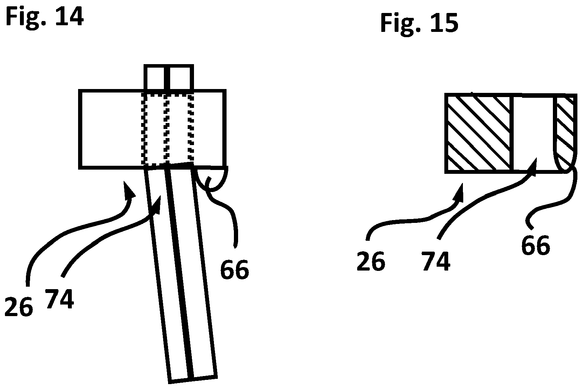

Figur 14 zeigt einen weiteren alternativen Kontaktabschnitt 26, wie er zur Durchführung der erfindungsgemäßen Verfahren und in den erfindungsgemäßen Vorrichtungen 10 verwendet werden kann. Dieser Kontaktabschnitt weist zum einen eine leicht anders ausgebildete Kante 66 auf, die eher halbkreisförmig ausgebildet ist, während die Kante 66 der Figuren 8-13 jeweils eine abgerundete Hakenform aufweist.

Die Form der Kante 66 kann dabei bei den jeweiligen Kontaktabschnitten 26 auch jeweils anders ausgebildet sein. Insbesondere ist die Kante jeweils verrundet und/oder insbesondere auf ihrer den Leiterstücken zugewandten Seite sich zu diesen hin verjüngend ausgebildet. Zum anderen weist der Kontaktabschnitt 26 aus Figur 14 auch keine Klemmeinrichtung 65 auf. Der Kontaktabschnitt 26 weist ein Aufnahmebereich 74 auf, der auf die Dimension von 2 Leiterstücken 14 abgestimmt ist (die Anzahl kann je nach Anwendungsfall variiert werden) und eine die Weite aufweist, sodass die beiden Leiterstücke 14 durch den Aufnahmebereich 74 hindurchgeführt werden können und dann von beiden Seiten her seitlich durch die beiden seitlichen Wände des Aufnahmebereichs 74 kontaktiert werden. Es ist auch möglich einen derartigen Kontaktabschnitt 26 zu verwenden, der eine obere Wand, die einen gewissen Höhenanschlag (wie im Beispiel der Figuren 8-11 gezeigt) bildet, zu verwenden.

Figur 15 zeigt einen weiteren alternativen Kontaktabschnitt 26 in einer Schnittdarstellung, wie er zur Durchführung der erfindungsgemäßen Verfahren und in den erfindungsgemäßen Vorrichtungen 10 verwendet werden kann. Dieser Kontaktabschnitt 26 weist eine gegenüber der Ausführungsform von Figur 14 von den Leiterstücken zurück versetzte Kante 66 auf.

## Patentansprüche

1. Vorrichtung (10) zum Umformen eines oder mehrerer in einem Statorkern (12) angeordneten Leiterstücks (14),
wobei in dem Statorkern (12) eine Vielzahl an Leiterstücken (14) angeordnet ist, die auf mehreren in einer Umfangsrichtung (16) verlaufenden Kreisbahnen (17) in Reihen (19), die entlang einer Radialrichtung (18) erstreckt sind, angeordnet sind,
wobei die Umformung in einem aus dem Statorkern (12) herausragenden freien Ende des Leiterstücks (14) erfolgt,
wobei die Vorrichtung (10) umfasst:
eine Aufnahme für den Statorkern (12) in einer vorgesehenen Bearbeitungsposition in der die umzuformenden Leiterstücke (14) in einer Ausgangskonfiguration (vor dem Umformen) derart angeordnet sind, dass die aus dem Statorkern (12) herausragenden Leiterstücke (14) entlang einer Längsrichtung (20) erstreckt aus dem Statorkern (12) ragen;
Mindestens eine Biegeeinheit (11) zum Umformen des oder der Leiterstücke (14), wobei die Biegeeinheit (11) wiederum umfasst:
eine Positioniereinheit (22) zur Positionierung der Biegeeinheit (11) gegenüber der Aufnahme für den Statorkern (12)
einen Kontaktabschnitt (26), der ausgebildet ist, um das oder die umzuformenden Leiterstücke (14) seitlich zu kontaktieren;
einen Aktuator (28), der angeordnet und ausgebildet ist, um den Kontaktabschnitt (26) relativ zu Positioniereinheit (22) zu bewegen, um das oder die Leiterstücke (14) umzuformen;
wobei der Kontaktabschnitt (26) derart in der Positioniereinheit (22) gelagert ist, dass der Kontaktabschnitt (26) bei Betätigung des Aktuators (28) in einem ersten Bewegungsschritt gegenüber der Positioniereinheit (22) in eine erste Biegerichtung (23) bewegt wird ohne seine Schwenkstellung zu verändern,
**dadurch gekennzeichnet, dass**
in einem zweiten Bewegungsschritt die Bewegung des Kontaktabschnitts (26) in die erste Biegerichtung (23) mit einer, entgegen der ersten Biegerichtung (23) gerichteten, Schwenkbewegung in eine zweite Biegerichtung (25) des Kontaktabschnitts (26) überlagert ist.

2. Vorrichtung (10) nach Anspruch 1, **dadurch gekennzeichnet, dass** der Kontaktabschnitt (26) hülsenartig ausgebildet ist und/oder wobei der Kontaktabschnitt (26) eine abgerundete Kante (66) zum Eingriff zwischen zwei benachbart zueinander angeordnete Leiterstücke (14) umfasst und/oder wobei der Kontaktabschnitt (26) eine Klemmeinrichtung zur klemmenden Verspannung aufgenommener Leiterstücke zwischen einer Klemmfläche und einer Anlagewand aufweist, und/oder wobei der Kontaktabschnitt (26) eine Klemmeinrichtung mit einem in Richtung einer Anlagewand (68) gespannten Klemmelement (70) umfasst, welches eine geneigte Einführfläche (80) aufweist.

3. Vorrichtung (10) nach Anspruch 1 oder Anspruch 2, **dadurch gekennzeichnet, dass** die Biegeeinheit (11) ein erstes Führungselement (34) und ein zweites Führungselement (36) umfasst,
wobei das erste Führungselement (34) in dem zweiten Führungselement (36) schwenkbar gelagert ist und mit dem Kontaktabschnitt (26) derart gekoppelt ist, dass eine Schwenkbewegung des ersten Führungselements (34) sich auf den Kontaktabschnitt (26) überträgt, und wobei das zweite Führungselement (36) bezüglich der Positioniereinheit (22) entlang der ersten Biegerichtung (23) geführt translatorisch beweglich ist.

4. Vorrichtung (10) nach einem der vorhergehenden Ansprüche, **dadurch gekennzeichnet, dass** die Positioniereinheit (22) ein U-förmig ausgebildetes Rahmenelement (24) umfasst und dass das erste Führungselement (34) und das zweite Führungselement (36) in dem Rahmenelement (24) gelagert sind.

5. Vorrichtung (10) nach Anspruch 4, **dadurch gekennzeichnet, dass** das Rahmenelement (24) einen in der ersten Biegerichtung (23) liegenden ersten Anschlag (42) umfasst, der zur Kontaktierung des ersten Führungselements (34) angeordnet und ausgebildet ist, wenn dieses in die erste Biegerichtung (23) bewegt wird, wobei der Schwenkpunkt (40), in dem das erste Führungselement (34) mit dem zweiten Führungselement (36) verbunden ist zwischen dem ersten Anschlag (42) und dem Kontaktabschnitt (26) angeordnet ist.

6. Vorrichtung nach Anspruch 4 oder Anspruch 5, **dadurch gekennzeichnet, dass** das Rahmenelement (24) einen in der ersten Biegerichtung (23) liegenden zweiten Anschlag (44) umfasst, der zur Kontaktierung des zweiten Führungselements (36) angeordnet und ausgebildet ist, wenn dieses in die erste Biegerichtung (23) bewegt wird, und dessen Bewegung in die erste Biegerichtung (23) begrenzt.

7. Vorrichtung (10) nach einem der Ansprüche 3 bis 6, **dadurch gekennzeichnet, dass** das zweite Führungselement (36) einen vierten Anschlag (48) umfasst, der die Schwenkstellung des ersten Führungselements (34) ggü. dem zweiten Führungselement (36) in die erste Biegerichtung (23) begrenzt.

8. Vorrichtung (10) nach einem der Ansprüche 3 bis 7, **dadurch gekennzeichnet, dass** das zweite Führungselement (36) einen fünften Anschlag (50) umfasst, der die Schwenkstellung des ersten Führungselements (34) ggü. dem zweiten Führungselement (36) entgegen der ersten Biegerichtung (23) begrenzt.

9. Vorrichtung (10) nach einem der Ansprüche 5 bis 8, **dadurch gekennzeichnet, dass** die Position des ersten Anschlags (42) einstellbar ist.

10. Vorrichtung (10) nach einem der Ansprüche 3 bis 9, **dadurch gekennzeichnet, dass** der Kontaktabschnitt (26) mittels einer vorgespannten Kolbenstange (52) translatorisch beweglich in dem ersten Führungselement (34) geführt gelagert ist.

11. Vorrichtung (10) nach einem der vorhergehenden Ansprüche, **dadurch gekennzeichnet, dass** der Aktuator (28) ein Gelenk (54) aufweist.

12. Vorrichtung (10) nach einem der vorhergehenden Ansprüche, **dadurch gekennzeichnet, dass** die Vorrichtung (10) eine Gegenlagereinrichtung (56) umfasst, die derart beweglich angeordnet ist, dass ein Gegenlagerabschnitt (58) an das Leiterstück (14) anlegbar ist, um einen ersten Biegepunkt (60) zu definieren.

13. Vorrichtung nach Anspruch 4 oder Anspruch 12, **dadurch gekennzeichnet, dass** die Gegenlagereinrichtung (56), das Rahmenelement (24) und/oder der Aktuator (28) im Wesentlichen in einer Ebene angeordnet sind.

14. Vorrichtung (10) nach Anspruch 12 oder Anspruch 13, **dadurch gekennzeichnet, dass** der Gegenlagerabschnitt (58) durch eine Bewegung der Gegenlagereinrichtung (56) in die zweite Biegerichtung (25) an das Leiterstück (14) anlegbar ist.

15. Vorrichtung (10) nach Anspruch 12 bis 14, **dadurch gekennzeichnet, dass** der Gegenlagerabschnitt (58) derart angeordnet ist, dass er in einem unmittelbar an den Statorkern (12) angrenzenden Bereich des Leiterstücks (14) an dieses anlegbar ist.

16. Vorrichtung (10) nach einem der Ansprüche 12 bis 15, **dadurch gekennzeichnet, dass** der Gegenlagerabschnitt (58) zumindest teilweise eine abgerundete Form aufweist.

17. Verfahren zum Umformen eines oder mehrerer in einem Statorkern (12) angeordneten Leiterstücks (14),
wobei in dem Statorkern (12) eine Vielzahl an Leiterstücken (14) angeordnet ist, die auf mehreren in einer Umfangsrichtung (16) verlaufenden Kreisbahnen (17) in Reihen (19), die in einer Radialrichtung (18) erstreckt sind, angeordnet sind,
wobei die Umformung in einem aus dem Statorkern (12) herausragenden freien Ende des Leiterstücks (14) erfolgt,
wobei das Verfahren umfasst:
Anordnen des Statorkerns (12) in einer vorgesehenen Bearbeitungsposition in der die umzuformenden Leiterstücke (14) in einer Ausgangskonfiguration (vor dem Umformen) derart angeordnet sind, dass die aus dem Statorkern (12) herausragenden freien Enden der Leiterstücke (14) entlang einer Längsrichtung (20) erstreckt aus dem Statorkern (12) ragen;
Bewegen eines Kontaktabschnitts (26), der ausgebildet ist, um das umzuformende Leiterstück (14) bzw. die umzuformenden Leiterstücke (14) seitlich zu kontaktieren, entlang der Längsrichtung (20) in eine Kontaktstellung mit dem Leiterstück (14) bzw. den Leiterstücken (14), in der das Leiterstück (14) bzw. die Leiterstücke (14) in dem Kontaktabschnitt (26) aufgenommen und von diesem wenigstens seitlich kontaktiert;
Bewegen des Kontaktabschnitts (26) in eine erste Biegerichtung (23), wobei eine Ausrichtung des Kontaktabschnitts (26) unverändert bleibt, sodass das in dem Kontaktabschnitt (26) aufgenommene Leiterstück (14) bzw. Leiterstücke (14) um einen ersten Biegepunkt (60) in die erste Biegerichtung (23) gebogen wird und ein sich vom freien Ende in Längsrichtung erstreckender Endabschnitt (62) des Leiterstücks bzw. der Leiterstücke (14) in seiner Ausrichtung verbleibt, **dadurch gekennzeichnet, dass**
ein zweiter Biegepunkt (64), der vom ersten Biegepunkt (60) beabstandet ist, durch eine Kante (66) des Kontaktabschnitts (26) festgelegt wird, sodass das in dem Kontaktabschnitt (26) aufgenommene Leiterstück (14) bzw. Leiterstücke (14) um den zweiten Biegepunkt (64) in eine zweite Biegerichtung (25), die entgegen der ersten Biegerichtung (23) gerichtet ist, gebogen wird;
Verschwenken des Kontaktabschnitts (26) derart, dass das freie Ende des Leiterstücks (14) bzw. die freien Enden der Leiterstücke (14) ggü. dem weiteren Verlauf des Leiterstücks (14) bzw. der Leiterstücke (14) um den zweiten Biegepunkt (64) in die zweite Biegerichtung (25) gebogen wird.

18. Verfahren nach Anspruch 17, **dadurch gekennzeichnet, dass** während des gesamten Biegevorgangs das Leiterstück (14) bzw. die Leiterstücke (14) von seitlich als auch von seinem freien Ende her durch den Kontaktabschnitt (26) kontaktiert wird und die durch das Biegen verursachte Änderung der Lage des freien Endes in Längsrichtung (20) durch eine Bewegung des Kontaktabschnitts (26), kompensiert wird, um den Kontakt mit dem freien Ende aufrecht zu halten.

19. Verfahren nach Anspruch 17 oder Anspruch 18, **dadurch gekennzeichnet, dass** während des Verschwenkens des Kontaktabschnitts (26) der zweite Biegepunkt (64) relativ zum Statorkern (12) bewegt wird.

20. Verfahren nach einem der Ansprüche 17 bis 19, **dadurch gekennzeichnet, dass** die Biegung um den ersten Biegepunkt (60) und die Biegung um den zweiten Biegepunkt (64) in einer Ebene verlaufen.

21. Verfahren nach einem der Ansprüche 17 bis 20, **dadurch gekennzeichnet, dass** am ersten Biegepunkt (60) und/oder am zweiten Biegepunkt (64) um einen größeren Winkel gebogen wird, als in der endgültig gewünschten Form vorgesehen, so dass ein Rückfedern des Leiterstücks (14) bzw. der Leiterstücke (14) zumindest teilweise ausgeglichen wird.

22. Verfahren nach einem der Ansprüche 17 bis 21, **dadurch gekennzeichnet, dass** bei der Durchführung des Verfahrens eine Vorrichtung (10) nach einem der Ansprüche 1 bis 16 verwendet wird.

## Claims

1. Device (10) for shaping one or more conductor pieces (14) arranged in a stator core (12),
a plurality of conductor pieces (14) being arranged in the stator core (12), which conductor pieces are arranged on a plurality of circular paths (17) extending in a circumferential direction (16), in rows (19) extending along a radial direction (18),
the shaping taking place at a free end of the conductor piece (14) that projects from the stator core (12),
the device (10) comprising:
a receptacle for the stator core (12) in a provided operating position in which the conductor pieces (14) to be shaped are arranged in an initial configuration (before shaping) in such a way that the conductor pieces (14) projecting from the stator core (12) project extending from the stator core (12) along a longitudinal direction (20);
at least one bending unit (11) for shaping the conductor piece(s) (14), the bending unit (11) in turn comprising:
a positioning unit (22) for positioning the bending unit (11) with respect to the receptacle for the stator core (12),
a contact portion (26) which is designed to laterally contact the conductor piece(s) (14) to be shaped,
an actuator (28) which is arranged and designed to move the contact portion (26) relative to the positioning unit (22) in order to shape the conductor piece(s) (14);
the contact portion (26) being mounted in the positioning unit (22) in such a way that, when the actuator (28) is actuated, the contact portion (26) is moved in a first movement step in a first bending direction (23) with respect to the positioning unit (22) without changing its pivoting position,
**characterized in that**
in a second movement step, the movement of the contact portion (26) in the first bending direction (23) is superimposed with a pivoting movement in a second bending direction (25) of the contact portion (26) counter to the first bending direction (23).

2. Device (10) according to claim 1, **characterized in that** the contact portion (26) is designed like a sleeve, and/or the contact portion (26) comprising a rounded edge (66) for engagement between two conductor pieces (14) arranged adjacent to one another, and/or the contact portion (26) having a clamping apparatus for clampingly bracing received conductor pieces between a clamping surface and a contact wall, and/or the contact portion (26) comprising a clamping apparatus having a clamping element (70) which is clamped in the direction of a contact wall (68) and has an inclined insertion surface (80).

3. Device (10) according to claim 1 or claim 2, **characterized in that** the bending unit (11) comprises a first guide element (34) and a second guide element (36),
the first guide element (34) being pivotably mounted in the second guide element (36) and coupled to the contact portion (26) in such a way that a pivoting movement of the first guide element (34) is transmitted to the contact portion (26), and the second guide element (36) being movable with respect to the positioning unit (22) in a guided translatory manner along the first bending direction (23).

4. Device (10) according to any of the preceding claims, **characterized in that** the positioning unit (22) comprises a U-shaped frame element (24) **and in that** the first guide element (34) and the second guide element (36) are mounted in the frame element (24).

5. Device (10) according to claim 4, **characterized in that** the frame element (24) comprises a first stop (42) in the first bending direction (23), which stop is arranged and designed for contacting the first guide element (34) when said element is moved in the first bending direction (23), the pivot point (40) in which the first guide element (34) is connected to the second guide element (36) being arranged between the first stop (42) and the contact portion (26).

6. Device according to claim 4 or claim 5, **characterized in that** the frame element (24) comprises a second stop (44) in the first bending direction (23), which stop is arranged and designed for contacting the second guide element (36) when said element is moved in the first bending direction (23), and which stop delimits the movement of said element in the first bending direction (23).

7. Device (10) according to any of claims 3 to 6, **characterized in that** the second guide element (36) comprises a fourth stop (48) which delimits the pivot positioning of the first guide element (34) with respect to the second guide element (36) in the first bending direction (23).

8. Device (10) according to any of claims 3 to 7, **characterized in that** the second guide element (36) comprises a fifth stop (50) which delimits the pivot positioning of the first guide element (34) with respect to the second guide element (36) counter to the first bending direction (23).

9. Device (10) according to any of claims 5 to 8, **characterized in that** the position of the first stop (42) is adjustable.

10. Device (10) according to any of claims 3 to 9, **characterized in that** the contact portion (26) is mounted such that it can be guided in a translatory manner in the first guide element (34) by means of a pretensioned piston rod (52).

11. Device (10) according to any of the preceding claims, **characterized in that** the actuator (28) has a joint (54).

12. Device (10) according to any of the preceding claims, **characterized in that** the device (10) comprises a counter-bearing apparatus (56) which is movably arranged in such a way that a counter-bearing portion (58) can be placed against the conductor piece (14) in order to define a first bending point (60).

13. Device according to claim 4 or claim 12, **characterized in that** the counter-bearing apparatus (56), the frame element (24) and/or the actuator (28) are arranged substantially in one plane.

14. Device (10) according to claim 12 or claim 13, **characterized in that** the counter-bearing portion (58) can be placed against the conductor piece (14) by means of a movement of the counter-bearing apparatus (56) in the second bending direction (25).

15. Device (10) according to claims 12 to 14, **characterized in that** the counter-bearing portion (58) is arranged in such a way that it can be placed against the conductor piece (14) in a region thereof that is directly adjacent to the stator core (12).

16. Device (10) according to any of claims 12 to 15, **characterized in that** the counter-bearing portion (58) has at least in part a rounded shape.

17. Method for shaping one or more conductor pieces (14) arranged in a stator core (12),
a plurality of conductor pieces (14) being arranged in the stator core (12), which conductor pieces are arranged on a plurality of circular paths (17) extending in a circumferential direction (16), in rows (19) extending along a radial direction (18),
the shaping taking place at a free end of the conductor piece (14) that projects from the stator core (12),
the method comprising:
arranging the stator core (12) in a provided operating position in which the conductor pieces (14) to be shaped are arranged in an initial configuration (before shaping) in such a way that the free ends of the conductor pieces (14) projecting from the stator core (12) project extending from the stator core (12) along a longitudinal direction (20);
moving a contact portion (26), which is designed to laterally contact the conductor piece (14) or conductor pieces (14) to be shaped, along the longitudinal direction (20) into a contact position with the conductor piece (14) or conductor pieces (14), in which position the conductor piece (14) or conductor pieces (14) is/are received in the contact portion (26) and at least laterally contacted by the contact portion;
moving the contact portion (26) in a first bending direction (23), an alignment of the contact portion (26) remaining unchanged, so that the conductor piece (14) or conductor pieces (14) received in the contact portion (26) is/are bent about a first bending point (60) in the first bending direction (23) and an end portion (62) of the conductor piece(s) (14) extending from the free end in the longitudinal direction remains in its alignment,
**characterized in that**
a second bending point (64), which is spaced apart from the first bending point (60), is defined by an edge (66) of the contact portion (26), so that the conductor piece (14) or conductor pieces (14) received in the contact portion (26) is/are bent about the second bending point (64) in a second bending direction (25) which is directed counter to the first bending direction (23);
pivoting the contact portion (26) in such a way that the free end of the conductor piece (14) or the free ends of the conductor pieces (14) is/are bent about the second bending point (64) in the second bending direction (25) with respect to the further course of the conductor piece (14) or conductor pieces (14).

18. Method according to claim 17, **characterized in that,** during the entire bending process, the conductor piece (14) or conductor pieces (14) is/are contacted laterally as well as from the free end thereof by the contact portion (26) and the change in the position of the free end in the longitudinal direction (20) caused by the bending (20) is compensated for by a movement of the contact portion (26) in order to maintain contact with the free end.

19. The method according to claim 17 or claim 18, **characterized in that,** during the pivoting of the contact portion (26), the second bending point (64) is moved relative to the stator core (12).

20. Method according to any of claims 17 to 19, **characterized in that** the bending about the first bending point (60) and the bending about the second bending point (64) extend in one plane.

21. Method according to any of claims 17 to 20, **characterized in that** the bending at the first bending point (60) and/or at the second bending point (64) is by an angle greater than that provided in the final desired shape, so that a springback of the conductor piece (14) or conductor pieces (14) is at least partially compensated for.

22. Method according to any of claims 17 to 21, **characterized in that** a device (10) according to any of claims 1 to 16 is used for carrying out the method.

## Revendications

1. Dispositif (10) pour le formage d'une ou plusieurs pièces conductrices (14) disposées dans un noyau statorique (12), dans lequel une pluralité de pièces conductrices (14) est disposée dans le noyau statorique (12), qui sont disposées sur plusieurs trajectoires circulaires (17) s'étendant dans une direction périphérique (16) en rangées (19) qui sont étendues le long d'une direction radiale (18),
dans lequel le formage est effectué dans une extrémité libre de la pièce conductrice (14) dépassant du noyau statorique (12),
dans lequel le dispositif (10) comprend :
un logement pour le noyau statorique (12) dans une position d'usinage prévue dans laquelle les pièces conductrices (14) à former sont disposées dans une configuration initiale (avant le formage), de telle sorte que les pièces conductrices (14) dépassant du noyau statorique (12) dépassent du noyau statorique (12) de manière étendue le long d'une direction longitudinale (20) ;
au moins une unité de flexion (11) pour former la ou les pièces conductrices (14), dans lequel l'unité de flexion (11) comprend à son tour :
une unité de positionnement (22) pour positionner l'unité de flexion (11) par rapport au logement pour le noyau statorique (12)
une section de contact (26), qui est réalisée pour entrer en contact latéralement avec la ou les pièces conductrices (14) à former ;
un actionneur (28), qui est disposé et réalisé pour déplacer la section de contact (26) par rapport à l'unité de positionnement (22), afin de former la ou les pièces conductrices (14) ;
dans lequel la section de contact (26) est logée dans l'unité de positionnement (22) de telle sorte que, lors de l'actionnement de l'actionneur (28), la section de contact (26) est déplacée dans une première direction de flexion (23) par rapport à l'unité de positionnement (22) dans une première étape de mouvement sans modifier sa position de pivotement,
**caractérisé en ce que**, dans une deuxième étape de mouvement, le mouvement de la section de contact (26) dans la première direction de flexion (23) est superposé à un mouvement de pivotement dans une deuxième direction de flexion (25) de la section de contact (26), orienté à l'encontre de la première direction de flexion (23).

2. Dispositif (10) selon la revendication 1, **caractérisé en ce que** la section de contact (26) est réalisée en forme de douille et/ou dans lequel la section de contact (26) comprend une arête arrondie (66) pour l'engagement entre deux pièces conductrices (14) disposées au voisinage l'une de l'autre et/ou dans lequel la section de contact (26) présente un système de serrage pour la mise en tension par serrage de pièces conductrices reçues entre une surface de serrage et une paroi d'appui, et/ou dans lequel la section de contact (26) comprend un système de serrage avec un élément de serrage (70) mis sous tension en direction d'une paroi d'appui (68), lequel présente une surface d'introduction inclinée (80).

3. Dispositif (10) selon la revendication 1 ou la revendication 2, **caractérisé en ce que** l'unité de flexion (11) comprend un premier élément de guidage (34) et un deuxième élément de guidage (36),
dans lequel le premier élément de guidage (34) est logé de manière pivotante dans le deuxième élément de guidage (36) et est couplé à la section de contact (26), de telle sorte qu'un mouvement de pivotement du premier élément de guidage (34) se transmette à la section de contact (26), et dans lequel le deuxième élément de guidage (36) est mobile en translation par rapport à l'unité de positionnement (22), de manière guidée le long de la première direction de flexion (23) .

4. Dispositif (10) selon l'une quelconque des revendications précédentes, **caractérisé en ce que** l'unité de positionnement (22) comprend un élément de cadre (24) réalisé en forme de U et **en ce que** le premier élément de guidage (34) et le deuxième élément de guidage (36) sont logés dans l'élément de cadre (24).

5. Dispositif (10) selon la revendication 4, **caractérisé en ce que** l'élément de cadre (24) comprend une première butée (42) située dans la première direction de flexion (23), qui est disposée et réalisée pour entrer en contact avec le premier élément de guidage (34) lorsque celui-ci est déplacé dans la première direction de flexion (23), dans lequel le point de pivotement (40), dans lequel le premier élément de guidage (34) est relié au deuxième élément de guidage (36), est disposé entre la première butée (42) et la section de contact (26).

6. Dispositif selon la revendication 4 ou la revendication 5, **caractérisé en ce que** l'élément de cadre (24) comprend une deuxième butée (44) située dans la première direction de flexion (23), qui est disposée et réalisée pour entrer en contact avec le deuxième élément de guidage (36) lorsque celui-ci est déplacé dans la première direction de flexion (23), et qui limite son mouvement dans la première direction de flexion (23).

7. Dispositif (10) selon l'une quelconque des revendications 3 à 6, **caractérisé en ce que** le deuxième élément de guidage (36) comprend une quatrième butée (48), qui limite la position de pivotement du premier élément de guidage (34) par rapport au deuxième élément de guidage (36) dans la première direction de flexion (23).

8. Dispositif (10) selon l'une quelconque des revendications 3 à 7, **caractérisé en ce que** le deuxième élément de guidage (36) comprend une cinquième butée (50), qui limite la position de pivotement du premier élément de guidage (34) par rapport au deuxième élément de guidage (36) à l'encontre de la première direction de flexion (23).

9. Dispositif (10) selon l'une quelconque des revendications 5 à 8, **caractérisé en ce que** la position de la première butée (42) est réglable.

10. Dispositif (10) selon l'une quelconque des revendications 3 à 9, **caractérisé en ce que** la section de contact (26) est logée mobile en translation de manière guidée dans le premier élément de guidage (34) au moyen d'une tige de piston précontrainte (52).

11. Dispositif selon l'une quelconque des revendications précédentes, **caractérisé en ce que** l'actionneur (28) présente une articulation (54).

12. Dispositif (10) selon l'une quelconque des revendications précédentes, **caractérisé en ce que** le dispositif (10) comprend un système de contre-appui (56), qui est disposé de manière mobile de telle sorte qu'une section de contre-appui (58) puisse être appliquée contre la pièce conductrice (14) pour définir un premier point de flexion (60) .

13. Dispositif selon la revendication 4 ou la revendication 12, **caractérisé en ce que** le système de contre-appui (56), l'élément de cadre (24) et/ou l'actionneur (28) sont disposés sensiblement dans un même plan.

14. Dispositif (10) selon la revendication 12 ou la revendication 13, **caractérisé en ce que** la section de contre-appui (58) peut être appliquée contre la pièce conductrice (14) par un mouvement du système de contre-appui (56) dans la deuxième direction de flexion (25).

15. Dispositif (10) selon la revendication 12 à 14, **caractérisé en ce que** la section de contre-appui (58) est disposée de telle sorte que dans une zone de la pièce conductrice (14) directement adjacente au noyau statorique (12) elle peut être appliquée contre celle-ci.

16. Dispositif d'éclairage (10) selon l'une quelconque des revendications 12 à 15, **caractérisé en ce que** la section de contre-appui (58) présente au moins en partie une forme arrondie.

17. Procédé de formage d'une ou plusieurs pièces conductrices (14) disposées dans un noyau statorique (12), dans lequel une pluralité de pièces conductrices (14) est disposée dans le noyau statorique (12), qui sont disposées sur plusieurs trajectoires circulaires (17) s'étendant dans une direction périphérique (16) en rangées (19), qui s'étendent dans une direction radiale (18),
dans lequel le formage est effectué dans une extrémité libre de la pièce conductrice (14) dépassant du noyau statorique (12),
dans lequel le procédé comprend :
l'agencement du noyau statorique (12) dans une position d'usinage prévue dans laquelle les pièces conductrices (14) à former sont disposées dans une configuration initiale (avant le formage), de telle sorte que les extrémités libres des pièces conductrices (14) dépassent du noyau statorique (12) s'étendent hors du noyau statorique (12) de manière à s'étendre le long d'une direction longitudinale (20) ;
le mouvement d'une section de contact (26), qui est réalisée pour entrer en contact latéralement avec la pièce conductrice (14) à former ou les pièces conductrices (14) à former, le long de la direction longitudinale (20) dans une position de contact avec la pièce conductrice (14) ou les pièces conductrices (14), dans laquelle la pièce conductrice (14) ou les pièces conductrices (14) sont reçues dans la section de contact (26) et sont mises en contact au moins latéralement par celle-ci ;
le mouvement de la section de contact (26) dans une première direction de flexion (23), dans lequel une orientation de la section de contact (26) reste inchangée, de sorte que la pièce conductrice (14) ou les pièces conductrices (14) reçues dans la section de contact (26) est fléchie autour d'un premier point de flexion (60) dans la première direction de flexion (23) et une section d'extrémité (62) de la pièce conductrice ou des pièces conductrices (14) s'étendant dans la direction longitudinale depuis l'extrémité libre reste dans son orientation, **caractérisé en ce que**
un deuxième point de flexion (64), qui est espacé du premier point de flexion (60), est défini par un bord (66) de la section de contact (26), de sorte que la pièce conductrice (14) ou les pièces conductrices (14) reçue dans la section de contact (26) est fléchie autour du deuxième point de flexion (64) dans une deuxième direction de flexion (25), qui est dirigée à l'encontre de la première direction de flexion (23) ;
le pivotement de la section de contact (26), de telle sorte que l'extrémité libre de la pièce conductrice (14) ou les extrémités libres des pièces conductrices (14) est fléchie autour du deuxième point de flexion (64) dans la deuxième direction de flexion (25) par rapport à la suite de la pièce conductrice (14) ou des pièces conductrices (14).

18. Procédé selon la revendication 17, **caractérisé en ce que**, pendant toute l'opération de flexion, la pièce conductrice (14) ou les pièces conductrices (14) est mise en contact par la section de contact (26), aussi bien latéralement que par son extrémité libre, et le changement de position de l'extrémité libre dans la direction longitudinale (20), provoqué par la flexion, est compensé par un mouvement de la section de contact (26), afin de maintenir le contact avec l'extrémité libre.

19. Procédé selon la revendication 17 ou la revendication 18, **caractérisé en ce que**, pendant le pivotement de la section de contact (26), le deuxième point de flexion (64) est déplacé par rapport au noyau statorique (12).

20. Procédé selon l'une quelconque des revendications 17 à 19, **caractérisé en ce que** la flexion autour du premier point de flexion (60) et la flexion autour du deuxième point de flexion (64) passent dans un même plan.

21. Procédé selon l'une quelconque des revendications 17 à 20, **caractérisé en ce qu'**au premier point de flexion (60) et/ou au deuxième point de flexion (64), on fléchit selon un angle plus grand que celui prévu dans la forme finale souhaitée, de sorte qu'un retour élastique de la pièce conductrice (14) ou des pièces conductrices (14) est au moins partiellement compensé.

22. Procédé selon l'une quelconque des revendications 17 à 21, **caractérisé en ce que**, lors de la mise en œuvre du procédé, un dispositif (10) selon l'une quelconque des revendications 1 à 16 est utilisé.
